# EUROPÄISCHE PATENTSCHRIFT

(11) **EP 3 165 389 B1**
(45) Veröffentlichungstag und Bekanntmachung des Hinweises auf die Patenterteilung: **26.12.2018**
(21) Anmeldenummer: 15192738.1
(22) Anmeldetag: 03.11.2015
(51) Int. Cl.: B60K 6/365, B60K 6/48, B60K 6/547, F16H 3/00, F16H 37/04

(54) **GETRIEBE FÜR EIN KRAFTFAHRZEUG UND ANTRIEBSSTRANG DAMIT**
TRANSMISSION FOR A MOTOR VEHICLE AND POWERTRAIN COMPRISING IT
BOITE DE VITESSES D'UN VÉHICULE AUTOMOBILE ET CHAÎNE CINÉMATIQUE LA COMPRENANT

(43) Veröffentlichungstag der Anmeldung: 10.05.2017
(73) Patentinhaber: ZF Friedrichshafen AG, 88046 Friedrichshafen (DE)
(72) Erfinder: Kaltenbach, Johannes, 88048 Friedrichshafen (DE); Glückler, Johannes, 88045 Friedrichshafen (DE); Renner, Stefan, 78351 Bodman-Ludwigshafen (DE); Gersten, Rayk, 88046 Friedrichshafen (DE)

(56) Entgegenhaltungen:
- DE-A1-102011 080 069
- DE-A1-102012 213 711
- DE-A1-102012 218 367
- DE-A1-102012 220 829

## Beschreibung

Die Erfindung betrifft ein Getriebe für ein Kraftfahrzeug und einen Antriebsstrang für ein Hybridfahrzeug mit einem solchen Getriebe. Ein Getriebe bezeichnet hier insbesondere ein mehrgängiges Getriebe, bei dem eine Vielzahl von Gängen, also feste Übersetzungsverhältnisse zwischen zwei Wellen des Getriebes, durch Schaltelemente bevorzugt automatisiert schaltbar sind. Bei den Schaltelementen handelt es sich beispielsweise um Kupplungen oder Bremsen. Derartige Getriebe finden vor allem in Kraftfahrzeugen, insbesondere auch bei Nutzfahrzeugen, Anwendung, um die Drehzahl- und Drehmomentabgabecharakteristik der Antriebseinheit den Fahrwiderständen des Fahrzeugs in geeigneter Weise anzupassen.

Fahrzeuge mit Hybridantrieben sind aus dem Stand der Technik bekannt. Hybridantriebe besitzen dabei zwei oder mehr verschiedene Antriebsquellen, wobei sich weitgehend Antriebsstränge mit einem Verbrennungsmotor und einem oder mehreren Elektromotoren als Parallelhybrid oder als Mischhybrid durchgesetzt haben. Diese Varianten besitzen eine im Kraftfluss im Wesentlichen parallele Anordnung des Verbrennungsmotors und des Elektroantriebs und damit ist sowohl eine Überlagerung der Antriebsmomente als auch eine Ansteuerung mit rein verbrennungsmotorischem Antrieb oder rein elektromotorischem Antrieb möglich.

Aus der DE 10 2010 030 573 A1 ist ein Hybridantrieb mit einem automatisierten Schaltgetriebe bekannt, der einen Verbrennungsmotor aufweist, der mit wenigstens einer ersten Getriebeeingangswelle triebverbunden ist, mit einem Elektroantrieb, der wenigstens eine elektrische Maschine aufweist, die mit einer zweiten Getriebeeingangswelle triebverbunden ist, mit wenigstens einer Vorgelegewelle, mit in mehreren Radsatzebenen angeordneten Losrädern und Festrädern, mit mehreren Gangschaltvorrichtungen und mit einer Getriebeabtriebswelle. Um eine große Variabilität hinsichtlich eines Radsatzkonzeptes sowie der Verteilung und der Anzahl elektrische und verbrennungsmotorischer Gänge zu ermöglichen, den Konstruktions- und Kostenaufwand gering zu halten und einen effizienten und komfortablen Betrieb zu gewährleisten, ist vorgesehen, dass die beiden Getriebeeingangswellen koaxial zueinander angeordnet sind, und dass eine Gangschaltvorrichtung in einer ihrer Schaltstellungen die beiden Getriebeeingangswellen antriebswirksam miteinander verbindet, und in einer andern Schaltstellung einen Gang schaltet. Damit ist eine Teilgetriebekoppelung möglich, die die beiden Eingangswellen, die Hohlwelle und die Vollwelle, miteinander koppelt, ohne dass ein Gang geschaltet wird.

Um einen möglichst effektiven Betrieb des Hybridantriebs zu erreichen, werden Antriebsstrategien eingesetzt, die den Elektroantrieb situationsbedingt flexibel einsetzen, beispielsweise zum Anfahren, als Startergenerator oder als Generator zur Stromerzeugung. Aus der DE 10 2010 063 582 A1 ist eine Vorrichtung für einen Antriebsstrang eines Hybridfahrzeugs bekannt, mit einem die Elemente Steg, Sonnenrad und Hohlrad aufweisenden Planetengetriebe, wobei ein erstes Element dieser Elemente des Planetengetriebes der festen Anbindung einer ersten Getriebeeingangswelle eines ersten Teilgetriebes eines Getriebes dient, und wobei ein zweites Element dieser Elemente des Planetengetriebes der festen Anbindung einer elektrischen Maschine eines Hybridantriebs dient, mit einem ersten Schaltelement, über welches ein drittes Element dieser Elemente des Planetengetriebes in einer ersten Schalstellung des ersten Schaltelements an einer zweiten Getriebeeingangswelle eines zweiten Teilgetriebes des Getriebes, an welcher ferner ein Verbrennungsmotor des Hybridantriebs koppelbar ist, und in einer zweiten Schaltstellung des ersten Schaltelements gehäuseseitig bzw. statorseitig anbindbar ist, und mit einem zweiten Schaltelement, über welches bei geschlossenem zweiten Schaltelement beide Getriebeeingangswellen beider Teilgetriebe aneinander koppelbar und bei geöffnetem zweiten Schaltelement beide Getriebeeingangswellen beider Teilgetriebe voneinander trennbar sind. Damit ist ein elektrodynamisches Anfahren und auch elektrodynamisches Schalten möglich. Außerdem kann die elektrische Maschine als integrierter Startergenerator verwendet werden.

Aus der DE 10 2011 080 069 A1 ist ein automatisiertes Gruppengetriebe bekannt, mit einem in Vorgelegebauweise ausgeführten Hauptgetriebe, welches eine Hauptwelle und mindestens eine Vorgelegewelle aufweist, und mit einer dem Hauptgetriebe antriebstechnisch vorgeschalteten Vorschaltgruppe, wobei eine, als Vollwelle ausgeführte Eingangswelle mit einem Verbrennungsmotor und eine Ausgangswelle mit einem Achsantrieb koppelbar ist, wobei eine elektrische Maschine an die Vorschaltgruppe über ein Planetengetriebe koppelbar ist und eine Bereichsgruppe in Form eines Planetengetriebes an das Hauptgetriebe anschließt. Das Hauptgetriebe zeigt vier Vorwärtsgang- und eine Rückwärtsgangradebene, sowie drei Schaltelemente. Das erste Schaltelement der Vorschaltgruppe kann dabei die erste oder die zweite Radebene der Splitgruppe mit der als Vollwelle ausgeführten Eingangswelle verbinden.

Aus der DE 102012 213 711 A1 ist zudem ein Doppelkupplungsgetriebe mit neun Gängen bekannt, mit dem ein lastschaltfähiger Gruppenwechsel zwischen einer langsamen und einer schnellen Gruppe möglich wird.

Ausgehend vom Stand der Technik stellt sich der Fachmann die Aufgabe ein automatisiertes lastschaltbares Schaltgetriebe für Hybridanwendungen zu schaffen, welches die verschiedensten Vorteile der bestehenden Schaltgetriebe verbindet und diese so umsetzt, dass ein Getriebe bzw. ein Antriebsstrang mit diesem Getriebe mit geringem Bauaufwand und hohem Wirkungsgrad entsteht, der speziell eine Spreizung und Stufung für Fern-LKWs aufweist.

Die Aufgabe wird gelöst durch die Merkmale der Patentansprüche 1 und 11. Vorteilhafte Ausgestaltungen ergeben sich aus den Unteransprüchen, der Beschreibung sowie aus den Figuren.

Das erfindungsgemäße Getriebe weist ein zwei parallel geschaltete Teilgetriebe umfassendes Hauptgetriebe, sowie eine Ausgangswelle und zwei zumindest die Elemente Steg, Sonnenrad und Hohlrad aufweisende Planetengetriebe auf. Jedes Teilgetriebe weist dabei eine Getriebeeingangswelle auf, wobei eine erste Getriebeeingangswelle für ein erstes Teilgetriebe als Hohlwelle und eine zweite Getriebeeingangswelle für ein zweites Teilgetriebe als Vollwelle ausgeführt ist. Ein erstes Planetengetriebe schließt als Bereichsgruppe an das Hauptgetriebe an. Eine Bereichsgruppe dient der Verdopplung der Gangzahl des Hauptgetriebes, wobei zwei Bereiche geschaltet werden können, ein schneller und ein langsamer Bereich. Dafür umfasst das Getriebe ein fünftes Schaltelement, welches das Hohlrad der Bereichsgruppe entweder mit einer Ausgangswelle koppelt oder gehäusefest arretiert. In der ersten Schaltstellung, in der das Hohlrad mit dem Gehäuse verbunden ist, entsteht eine langsame Übersetzung und in einer zweiten Schaltstellung, in der das Hohlrad mit der Ausgangswelle gekoppelt ist und damit mit dem Planetenrad verblockt ist, wird eine schnelle Übersetzung hergestellt. Das Hauptgetriebe umfasst eine erste, eine zweite, eine dritte, eine vierte und eine fünfte Radebene und ein erstes, ein zweites, ein drittes und ein viertes Schaltelement. Ein zweites Planetengetriebe ist zwischen einer elektrischen Maschine und der ersten Getriebeeingangswelle als Planetenstufe vorgesehen. Die fünfte Radebene bildet die Abtriebskonstante des Hauptgetriebes und kann mit Hilfe des vierten Schaltelements in einer seiner Schaltstellungen an den Steg der Bereichsgruppe gekoppelt werden. Über die Vorgelegewelle kann die elektrische Maschine damit die Zugkraft stützen, indem das Drehmoment direkt von der Vorgelegewelle über die Abtriebskonstante auf den Steg der Bereichsgruppe und damit auf die mit dem Steg der Bereichsgruppe verbundene Ausgangswelle übertragen wird, während das fünfte Schaltelement lastfrei wird und umgeschaltet werden kann. Ein weiterer Vorteil dieses Aufbaus besteht darin, dass beim Fahren im Direktgang die Drehzahl der Vorgelegewelle abgesenkt werden kann, um Schleppverluste zum Beispiel an den Lagern und den Dichtungen zu reduzieren.

Das vierte Schaltelement verbindet in einer ersten Schaltstellung die fünfte Radebene des Hauptgetriebes, die Abtriebskonstante, mit der Hauptwelle. Damit ist die Vorgelegewelle über die Abtriebskonstante des Hauptgetriebes mit der Hauptwelle und der Sonne des Planetengetriebes der Bereichsgruppe verbunden.

Das Getriebe kann ein sechstes doppelwirkendes Schaltelement umfassen, welches in einer ersten Schaltposition die zweite Eingangswelle mit dem Hohlrad der Planetenstufe koppelt und in einer zweiten Schaltstellung das Hohlrad der Planetenstufe gehäusefest arretiert. Wenn das Hohlrad mit der Planetenstufe gekoppelt ist, kann die Planetenstufe als Überlagerungsgetriebe wirken. Ein Antrieb der zweiten Eingangswelle ist am Hohlrad der Planetenstufe angebunden, die elektrische Maschine an der Sonne der Planetenradstufe und der Steg der Planetenradstufe an der ersten Eingangswelle des Hauptgetriebes. In der zweiten Schaltstellung des sechsten Schaltelements wirkt die Planetenstufe als feste Vorübersetzung für die elektrische Maschine. Dadurch kann die elektrische Maschine kostengünstig mit weniger Drehmoment, dafür aber höherer Drehzahl ausgelegt werden.

Das Hohlrad der Planetenstufe kann aber auch direkt mit dem Getriebegehäuse, bzw. einem Teil des Gehäuses, verbunden sein. Dadurch entsteht ebenfalls eine feste Vorübersetzung der elektrischen Maschine mit den oben genannten Vorteilen.

Außerdem ist eine Anordnung möglich, in der die Planetenstufe des Getriebes so angebunden ist, dass das Hohlrad der Planetenstufe mit der ersten Getriebeeingangswelle verbunden ist, der Steg der Planetenstufe gehäusefest arretiert ist und das Sonnenrad der Planetenstufe mit der elektrischen Maschine verbunden ist. Das Getriebe umfasst dabei ein sechstes einfachwirkendes Schaltelement, welches bei Betätigung die zweite Getriebeeingangswelle mit der elektrischen Maschine und dem Sonnenrad der Planetenstufe verbindet. Damit dreht der elektrische Antrieb in den Vorwärtsgängen rückwärts und über die Planetenstufe werden mit Hilfe des sechsten Schaltelements mechanische Rückwärtsgänge für den Antrieb der zweiten Getriebeeingangswelle bereitgestellt. Diejenigen Gänge, die dem ersten Teilgetriebe bzw. der ersten Getriebeeingangswelle zugeordnet sind, werden dann als Rückwärtsgänge mit zusätzlicher Untersetzung durch die Planetenstufe genutzt.

Das Hauptgetriebe umfasst mindestens eine Vorgelegewelle. Es kann aber auch als leistungsgeteiltes Zweivorgelegewellengetriebe ausgeführt werden. Alle Zahnräder auf der Vorgelegewelle sind als Festräder ausgeführt. Bei der Ausführungsvariante mit zwei Vorgelegewellen, werden beide Vorgelegewellen mit jeweils einem Festrad pro Radebene des Hauptgetriebes ausgeführt.

Das Hauptgetriebe ist als 5-Gang-Radsatz, mit fünf Radebenen, mit zwei Teilgetrieben und einer Teilgetriebekopplung ausgeführt. Die fünfte Radebene bildet dabei die Abtriebskonstante. Alle Radebenen sind als Vorwärtsgangradebenen ausgebildet und ein Rückwärtsgang wird über eine Drehrichtungsumkehr der elektrischen Maschine erzeugt.

Das erste Teilgetriebe ist der ersten Getriebeeingangswelle zugeordnet, welche als Hohlwelle ausgeführt ist. Das zweite Teilgetriebe ist der zweiten Getriebeeingangswelle zugeordnet, welche als Vollwelle ausgeführt ist. Dem zweiten Teilgetriebe ist auch ein Direktgang zugeordnet, bei dem der Kraftfluss nicht über die Vorgelegewelle bzw. Vorgelegewellen geführt wird. Die beiden Teilgetriebe können durch eines der Schaltelemente gekoppelt werden, so dass teilweise die Gänge der Teilgetriebe vom jeweils anderen Teilgetriebe genutzt werden können. Dadurch ist auch eine Koppelung der zwei Antriebe möglich, ohne dass dabei ein Drehmoment zur Ausgangswelle geführt wird. Außerdem können bedingt durch die zwei Teilgetriebe, die beiden Antriebe mit unterschiedlichen Übersetzungen betrieben werden. Damit können für beide Antriebe jeweils fahrsituationsabhängig geeignete Betriebspunkte gewählt werden. Die elektrische Maschine kann aber auch teilweise oder ganz still stehen, um Nulllastverluste zu vermeiden.

Alle Schaltelemente im Hauptgetriebe sind als unsynchronisierte Klauenschaltelement ausgeführt.

Alle Schaltelemente des Hauptgetriebes und des ersten Planetengetriebes, der Bereichsgruppe, sind als doppeltwirkende Schaltelemente ausgeführt, was bedeutet, dass sie zwei Betätigungsrichtungen in eine erste und in eine zweite Schaltstellung aufweisen. Sie können aber auch in eine dritte geöffnete Schaltstellung gebracht werden, eine Neutralstellung, in der weder die erste noch die zweite Schaltstellung betätigt wird und durch das Schaltelement keine Bauteile verbunden werden.

Die Koppelung von Bauteilen des Getriebes mit dem Gehäuse kann auch durch die Koppelung mit einem gehäusefesten Bauteil bzw. einem Gehäuseteil oder mit einem anderen drehfesten Bauelement des Getriebes umgesetzt werden.

Das Getriebe kann Bestandteil eines Antriebsstrangs eines Hybridfahrzeugs sein. Der erfindungsgemäße Antriebsstrang weist neben dem erfindungsgemäßen Getriebe einen Verbrennungsmotor als zweiten Antrieb, sowie ein mit Rädern des Hybridfahrzeugs verbundenes Achsgetriebe auf, wobei die zweite Getriebeeingangswelle des Hauptgetriebes ständig mit dem Verbrennungsmotor verbunden oder verbindbar ist und die Ausgangswelle des Getriebes mit dem Achsgetriebe antriebswirksam verbunden ist. Eine Trennkupplung für den Verbrennungsmotor kann verwendet werden, ist aber zum rein elektrischen Fahren nicht notwendig, da die zweite Getriebeeingangswelle durch Öffnen von Schaltelementen abgekoppelt werden kann.

Nachfolgend wird die vorliegende Erfindung anhand von Ausführungsbeispielen weiter erläutert:
Fig. 1: erfindungsgemäßes 10-Gang-Getriebe
Fig. 2: Tabelle mit beispielhaften Übersetzungen des erfindungsgemäßen Getriebes
Fig. 3: Schaltmatrix des erfindungsgemäßen Getriebes
Fig. 4: Schaltmatrix des erfindungsgemäßen Getriebes
Fig. 5: Ausführungsvariante 2 eines erfindungsgemäßen 10-Gang-Getriebes
Fig. 6: Schaltmatrix zu Ausführungsvariante 2
Fig. 7: Ausführungsvariante 3 eines erfindungsgemäßen 10-Gang-Getriebes
Fig. 8: Schaltmatrix zu Ausführungsvariante 3
Fig. 9: erfindungsgemäßer Antriebsstrang

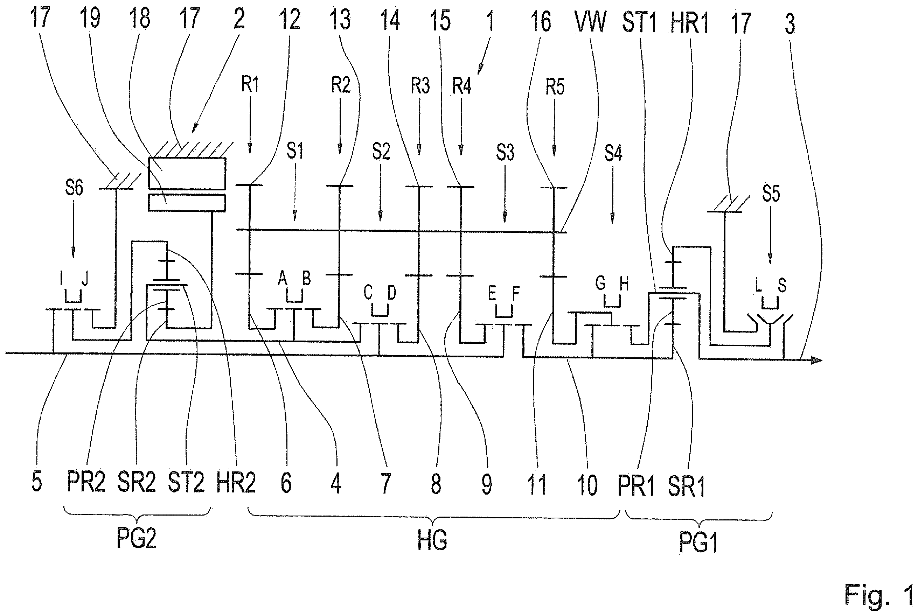

Fig.1 zeigt eine erste Ausführungsform eines Getriebes 1 mit einer elektrischen Maschine 2, mit einem 5-Gang-Hauptgetriebe HG mit zwei Teilgetrieben, mit einer Ausgangswelle 3, einem ersten Planetengetriebe PG1 und einem zweiten Planetengetriebe PG2, die jeweils die Elemente Steg ST1, ST2, mindestens ein Planetenrad PR1, PR2, Sonnenrad SR1, SR2 und Hohlrad HR1, HR2 aufweisen. Das erste Planetengetriebe PG1 wird als Bereichsgruppe eingesetzt und schließt an die Hauptgruppe HG an. Das zweite Planetengetriebe PG2 wird als Planetenstufe zwischen der elektrischen Maschine 2 und der ersten Getriebeeingangswelle 4 angeordnet. Die erste Getriebeeingangswelle 4 ist als Hohlwelle ausgeführt und einem ersten Teilgetriebe des Hauptgetriebes HG zugeordnet. Eine zweite Getriebeeingangswelle 5 ist als Vollwelle ausgeführt und dem zweiten Teilgetriebe des Hauptgetriebes HG zugeordnet. Das Hauptgetriebe HG umfasst eine erste Radebene R1, eine zweite Radebene R2, eine dritte Radebene R3, eine vierte Radebene R4 und eine fünfte Radebene R5 und ein erstes Schaltelement S1, eine zweites Schaltelement S2, ein drittes Schaltelement S3 und ein viertes Schaltelement S4. Die fünfte Radebene R5 bildet die Abtriebskonstante des Hauptgetriebes HG. Alle Schaltelemente des Hauptgetriebes S1-S4 sind als doppeltwirkende zweiseitige Schaltelemente ausgebildet und können zwei unterschiedliche Elemente des Getriebes 1 mit einer Welle oder einem Getriebebauteil verbinden. Die erste Radebene R1 wird durch ein erstes Losrad 6 der ersten Getriebeeingangswelle 4 mit einem ersten Festrad 12 der Vorgelegewelle VW gebildet. Die zweite Radebene R2 wird durch ein Losrad 7 der ersten Getriebeeingangswelle 4 mit einem zweiten Festrad 13 der Vorgelegewelle VW gebildet. Die dritte Radebene R3 wird durch ein drittes Losrad 8 auf der zweiten Getriebeeingangswelle 5 und ein drittes Festrad 14 der Vorgelegewelle VW gebildet. Die vierte Radebene R4 wird durch ein viertes Losrad 9 auf der zweiten Getriebeeingangswelle 5 und ein viertes Festrad 15 auf der Vorgelegewelle VW gebildet. Die fünfte Radebene R5 wird durch ein fünftes Losrad 11 auf der Hauptwelle 10 und ein fünftes Festrad 16 auf der Vorgelegewelle VW gebildet. Die Hauptwelle 10 verläuft koaxial zu den Getriebeeingangswelle 4, 5 und der Ausgangswelle 3 und liegt zwischen der zweiten Getriebeeingangswelle 5 und der Ausgangswelle 3. Die Vorgelegewelle VW verläuft parallel zur Achse der Getriebeeingangswellen 4, 5, der Hauptwelle 10 und der Ausgangswelle 3. Dabei kann das erste Schaltelement S1 in einer ersten Schaltstellung A die erste Radebene R1 oder in einer zweiten Schaltstellung B die zweite Radebene R2 mit der ersten Getriebeeingangswelle 4 verbinden. Das zweite Schaltelement S2 kann in einer ersten Schaltstellung C die erste Getriebeeingangswelle 4 oder in einer zweiten Schaltstellung D die dritte Radebene R3 mit der zweiten Getriebeeingangswelle 5 verbinden. Das zweite Schaltelement S2 dient damit in der ersten Schaltstellung C der Teilgetriebekopplung. Das dritte Schaltelement S3 kann in einer ersten Schaltstellung E die vierte Radebene R4 oder in einer zweiten Schaltstellung F die Hauptwelle 10 mit der zweiten Getriebeeingangswelle 5 koppeln. In der zweiten Schaltstellung F kann damit ein Direktgang geschaltet werden, wobei Drehmoment von der zweiten Getriebeeingangswelle 5 über die Hauptwelle 10 und das erste Planetengetriebe PG1 auf die Ausgangswelle 3 übertragen wird. Das vierte Schaltelement S4 kann in einer ersten Schaltstellung G die Hauptwelle 10 oder in einer zweiten Schaltstellung H den Steg ST1 des ersten Planetenradgetriebes PG1 mit der fünften Radebene R5 verbinden. Die Abtriebskonstante, die fünfte Radebene R5 des Hauptgetriebes HG, kann damit über ein einziges Schaltelement, das vierte Schaltelement S4, entweder an die Sonne SR1 oder an den Steg ST1 des ersten Planetengetriebes PG1 gekoppelt werden, da die Hauptwelle 10 direkt mit dem Sonnenrad SR1 des ersten Planetengetriebes verbunden ist. Durch die dadurch mögliche Koppelung der elektrischen Maschine 2 über die Abtriebskonstante an den Steg ST1 des ersten Planetengetriebes PG1, wird das fünfte Schaltelement S5 lastfrei und kann umgeschaltet werden. Die elektrische Maschine 2 stützt also über die Vorgelegewelle VW die Zugkraft, so dass die Bereichsgruppe PG1 zugkraftunterstützt geschaltet werden kann. Ein weiterer Vorteil der Koppelung der elektrischen Maschine 2 an den Steg ST1 ist, dass die Drehzahl der Vorgelegewelle VW beim Fahren im Direktgang abgesenkt werden kann, um Schleppverluste an Lager und Dichtungen zu reduzieren. Jedes der Schaltelemente S1-S4 kann auch in neutral geschaltet werden, so dass es keines der genannten Elemente miteinander verbindet.

Das Getriebe 1 umfasst eine Bereichsgruppe in Form eines ersten Planetengetriebes PG1. Die Bereichsgruppe PG1 dient der Verdopplung der Gangzahlen des Hauptgetriebes HG. Dafür kann durch ein fünftes Schaltelement S5, welches der Bereichsgruppe PG1 zugeordnet ist, in einer ersten Schaltstellung L das Hohlrad HR1 des ersten Planetengetriebes PG1 mit einem gehäusefesten Bauteil 17 bzw. einem Gehäuseteil oder mit einem anderen drehfesten Bauelement des Getriebes 1 verbunden werden. Dadurch wird ein langsamer Bereich gebildet. In einer zweiten Schaltstellung S des fünften Schaltelements S5 kann das Hohlrad HR1 des ersten Planetengetriebes PG1 mit der Ausgangswelle 3 und damit auch mit dem Steg ST1 des ersten Planetengetriebes PG1 verbunden werden. Der Steg ST1 ist drehfest mit der Ausgangswelle 3 verbunden. Damit werden die Bauteile Steg ST1 und Hohlrad HR1 in der zweiten Schaltstellung S des Schaltelements S5 miteinander verblockt und bilden einen schnellen Bereich.

Das zweite Planetengetriebe PG2 wird als Planetenstufe zwischen einer elektrischen Maschine 2 und der ersten Getriebeeingangswelle 4 angeordnet. Die elektrische Maschine 2 besitzt einen Stator 18, welcher drehfest mit einem gehäusefesten Bauteil 17 bzw. einem Getriebegehäuse des Getriebes 1 oder mit einem anderen drehfesten Bauelement des Getriebes 1 verbunden ist, sodass der Stator 18 keine Drehzahl annehmen kann. Ein drehbar gelagerter Rotor 19 der elektrischen Maschine 2 ist mit einer als Sonnenrad SR2 des zweiten Planetengetriebes PG2 ausgebildeten Planetenradsatzwelle der Planetenstufe PG2 drehfest verbunden. Der Steg ST2 des zweiten Planetengetriebes PG2 ist drehfest mit der ersten Getriebeeingangswelle 4 verbunden. Das Hohlrad HR2 des zweiten Planetengetriebes PG2 ist über ein sechstes Schaltelement S6, welches dem zweiten Planetengetriebe PG2 zugeordnet ist, in einer ersten Schaltstellung I mit der zweiten Getriebeeingangswelle 5 verbindbar und in einer zweiten Schaltstellung J des sechsten Schaltelements S6 gehäusefest arretierbar. In der ersten Schaltstellung I des sechsten Schaltelements S6 kann die Planetenstufe PG2 als Überlagerungsgetriebe wirken. In der zweiten Schaltstellung J des sechsten Schaltelements S6 wirkt die Planetenstufe PG2 als feste Vorübersetzung für die elektrische Maschine 2. Dadurch kann die elektrische Maschine 2 kostengünstig mit weniger Drehmoment, dafür aber einer höheren Drehzahl ausgelegt werden.

Durch die Anordnung der elektrischen Maschine 2 mit der Planetenstufe PG2 an der ersten Getriebeeingangswelle 4 ist die elektrische Maschine 2 dem ersten Teilgetriebe zugeordnet. Die zweite Getriebeeingangswelle 5 wird ebenfalls durch einen hier nicht dargestellten zweiten Antrieb angetrieben. Da dies in der Regel ein Verbrennungsmotor 21 ist, wird im weiteren Dokument von einem Verbrennungsmotor 21 als zweiten Antrieb gesprochen. Der Verbrennungsmotor 21 ist damit mit dem zweiten Teilgetriebe verbunden bzw. verbindbar. Jedem Teilgetriebe sind über die zugeordneten Radebenen R1-R5 auch schaltbare Gänge zugeordnet. Die erste Radebene R1 und die zweite Radebene R2 des Hauptgetriebes HG sind der ersten Getriebeeingangswelle 4 und damit auch dem ersten Teilgetriebe des Hauptgetriebes HG zugeordnet. Damit ist ein rein elektrisches Fahren über die zwei Gänge möglich, die über die zwei Radebenen R1 und R2 gebildet werden. Dabei muss ein Element der Planetenstufe PG2 gehäusefest arretiert sein. Durch die Bereichsgruppe PG1 entstehen dabei vier schaltbare rein elektrische Gänge. Die Rückwärtsfahrt ist durch eine Drehrichtungsumkehr der elektrischen Maschine 2 möglich. Eine Trennkupplung für den Verbrennungsmotor 21 ist zum rein elektrischen Fahren nicht notwendig, da die zweite Getriebeeingangswelle 5 durch das Öffnen des zweiten und dritten Schaltelements S2, S3 abgekoppelt werden kann. Die dritte Radebene R3 und die vierte Radebene R4 des Hauptgetriebes HG sind der zweiten Getriebeeingangswelle 5 und damit auch dem zweiten Teilgetriebe des Hauptgetriebes HG zugeordnet. Die fünfte Radebene R5 dient als Abtriebskonstante für beide Teilgetriebe des Hauptgetriebes HG. Durch die Teilgetriebekoppelung über das zweite Schaltelement S2 in der ersten Schaltstellung C können der Verbrennungsmotor 21 und die elektrische Maschine 2 die Gänge des jeweils anderen Teilgetriebes trotzdem nutzen. Dadurch, dass das zweite Schaltelement S2 als Doppelschaltelement, doppeltwirkendes zweiseitiges Schaltelement, ausgeführt ist, kann die elektrische Maschine 2 allerdings die dritte Radebene R3 des Hauptgetriebes HG nicht nutzen.

Durch die zwei Teilgetriebe können Verbrennungsmotor 21 und elektrische Maschine 2 mit unterschiedlichen Übersetzungen betrieben werden. Damit können für den Verbrennungsmotor 21 und für die elektrische Maschine 2 jeweils fahrsituationsabhängig geeignete Betriebspunkte gewählt werden. Die elektrische Maschine 2 kann teilweise auch ganz abgekoppelt werden und stillstehen und damit Nullastverluste vermeiden. Ein Abkoppeln der elektrischen Maschine 2 ist über das erste und das zweite Schaltelement S1 und S2 möglich, welche die erste Getriebeeingangswelle 4 nicht mit einem weiteren Bauteil verbinden dürfen, sowie dem sechsten Schaltelement S6, welches das Hohlrad HR2 der Planetenstufe nicht mit der zweiten Getriebeeingangswelle 5 koppeln darf.

Durch die Teilgetriebekoppelung über das zweite Schaltelement S2 in der Schaltstellung C kann der Verbrennungsmotor 21 mit der elektrischen Maschine 2 verbunden werden, ohne dass ein Drehmoment zur Ausgangswelle 3 geleitet wird. Dabei sind zumindest das erste Schaltelemente S1 und das dritte Schaltelement S3 des Hauptgetriebes HG nicht betätigt, sondern in einer neutralen Stellung. Dadurch kann der Verbrennungsmotor 21 mit der elektrischen Maschine 2 gestartet werden oder es kann in Neutral, d.h. unabhängig von der Fahrgeschwindigkeit, also auch im Stillstand, Strom erzeugt werden. Dabei treibt der Verbrennungsmotor 21 die elektrische Maschine 2 an. Die elektrische Maschine 2 arbeitet generatorisch.

Die Fig. 1 zeigt lediglich die obere Hälfte des zur Achse der Getriebeeingangswellen 4, 5, der Hauptwelle 10 und der Ausgangswelle 3 symmetrischen Radsatzes des Getriebes 1. Die Spiegelung an dieser Achse führt zu einer Variante mit zwei Vorgelegewellen VW, die zur Leistungsteilung dienen. Der Radsatz ist aber funktional identisch in der Ausführungsvariante mit nur einer Vorgelegewelle VW. Dies bedeutet, dass die Vorgelegewelle VW inklusive der zugehörigen Festräder 12, 13, 14, 15, 16 nicht gespiegelt werden.

Mit der erfindungsgemäßen Ausführungsform der Fig. 1 lässt sich eine unter EDA, Elektrodynamisches Anfahren, bekannte Anfahrfunktion umsetzen. Die elektrische Maschine 2 kann dabei rein oder nur zur Unterstützung des Verbrennungsmotors 21 zum Anfahren und Beschleunigen verwendet werden. Bei einem rein elektrischen Anfahren kann über das als Konstantübersetzung wirkende zweite Planetengetriebe PG2 ein erhöhtes Anfahrmoment bereitgestellt werden. Um elektrodynamisch anfahren zu können, muss das sechste Schaltelement S6 in seiner ersten Schaltstellung I sein. Wenn sich das sechste Schaltelement S6 in der ersten Schaltstellung I befindet, befindet sich das Getriebe 1 im EDA-Modus. Im Weiteren muss ein Gang des ersten Teilgetriebes, welcher der ersten Getriebeeingangswelle 4 zugeordnet ist, eingelegt sein und das zweite Teilgetriebe neutral, ohne Übertragung von Drehmoment, geschaltet sein. Der erste Gang G1 des Getriebes 1 wird in Fig. 1 der ersten Radebene R1 zugeordnet. Die erste Radebene R1 ist dabei dem ersten Teilgetriebe zugeordnet. Damit kann zum elektrodynamischen Anfahren das erste Schaltelement S1 in seiner ersten Schaltstellung A verwendet werden und im weiteren Kraftfluss kann für den ersten Gang G1 das vierte Schaltelement S4 in seiner ersten Schaltstellung G sein und das fünfte Schaltelement S5 in seiner ersten Schaltstellung L. Damit ist im ersten Gang G1 ein Kraftfluss von der ersten Getriebeeingangswelle 4 über die erste Radebene R1, die Vorgelegewelle VW, die Abtriebskonstante R5, die Hauptwelle 10 und die Bereichsgruppe PG1 im langsamen Bereich vorbereitet. Bei Fahrzeugstillstand dreht der Verbrennungsmotor 21 z.B. mit der Leerlaufdrehzahl und die elektrische Maschine 2 dreht rückwärts, so dass der Steg ST2 der Planetenstufe PG2 still steht. Die Drehmomentverhältnisse an der Planetenstufe PG2 sind konstant. Das Drehmoment des Verbrennungsmotors 21 und das Drehmoment der elektrischen Maschine 2 addieren sich am Steg ST2 der Planetenstufe PG2. Während des elektrodynamischen Anfahrens ändert sich die Drehzahl der elektrischen Maschine 2 bis hin zum Blockumlauf an der Planetenstufe PG2. Das Anfahren kann beendet werden, indem das zweite Schaltelement S2 in dessen erste Schaltstellung C gebracht wird, und die Planetenstufe PG2 damit verblockt wird.

Wird das Getriebe 1 im EDA-Modus betrieben, ist als Lastschaltfunktion ein Elektrodynamisches Schalten (EDS) möglich. Dabei bleibt im EDA-Modus das sechste Schaltelement S6 in seiner ersten Schaltstellung I. Ein dem ersten Teilgetriebe und damit der ersten Getriebeeingangswelle 4 zugeordneter Gang muss eingelegt sein. Dieser dient als Stützgang, über den der Kraftfluss während der Lastschaltung geleitet wird. Der Stützgang kann identisch sein mit dem Ist-Gang oder einem ZielGang. Es kann aber auch ein weiterer Gang des ersten Teilgetriebes verwendet werden. Das Schaltverfahren beginnt mit einer Lastübernahmephase. Dabei werden am Verbrennungsmotor 21 und an der elektrischen Maschine 2 die Drehmomente so eingestellt, dass es der Standgetriebeübersetzung der Planetenradstufe PG2 entspricht. Dadurch gibt es nur noch einen Kraftfluss über den Steg ST2 der Planetenradstufe PG2 und den Stützgang. Alle anderen Schaltelemente werden lastfrei. Die lastfrei gewordenen Schaltelemente des Ist-Gangs werden ausgelegt. Die Drehzahl des Verbrennungsmotors 21 und der elektrischen Maschine 2 werden so geregelt, dass das einzulegende Schaltelement des Ziel-Gangs synchron wird. Ist eine Synchronität hergestellt, wird das Schaltelement des Zielgangs eingelegt. Damit ist der Schaltvorgang abgeschlossen und die Last an der elektrischen Maschine 2 kann bedarfsweise abgebaut werden. Das EDS-Schaltverfahren, hat den Vorteil, dass das zuschaltende Schaltelement des Zielgangs durch das Zusammenspiel der elektrischen Maschine 2 und des Verbrennungsmotors 21 synchronisiert wird, wobei die elektrische Maschine 2 sehr gut regelbar ist. Ein weiterer Vorteil des EDS-Schaltverfahrens ist, dass eine hohe Zugkraft erreicht werden kann, da sich die Drehmomente des Verbrennungsmotors 21 und der elektrischen Maschine 2 am zweiten Planetengetriebe PG2 summieren.

Mit der erfindungsgemäßen Ausführungsform der Fig. 1 lässt sich ebenfalls eine unter ISG, Integrierter Startergenerator, bekannte Funktion umsetzen, bei der der Verbrennungsmotor 21 über die elektrische Maschine 2 gestartet und beschleunigt werden kann und die elektrische Maschine 2 auch als Generator verwendet werden kann. Im ISG-Modus befindet sich das sechste Schaltelement S6 in seiner zweiten Schaltstellung J und verbindet das Hohlrad HR2 mit einem gehäusefesten Bauteil 17. Auch ein rein elektrisches Fahren ist im ISG-Modus möglich, wobei das Hohlrad HR2 der Planetenradstufe PG2 gehäusefest arretiert ist und die elektrische Maschine 2 ein Drehmoment auf den Steg ST2 der Planetenradstufe PG2 überträgt.

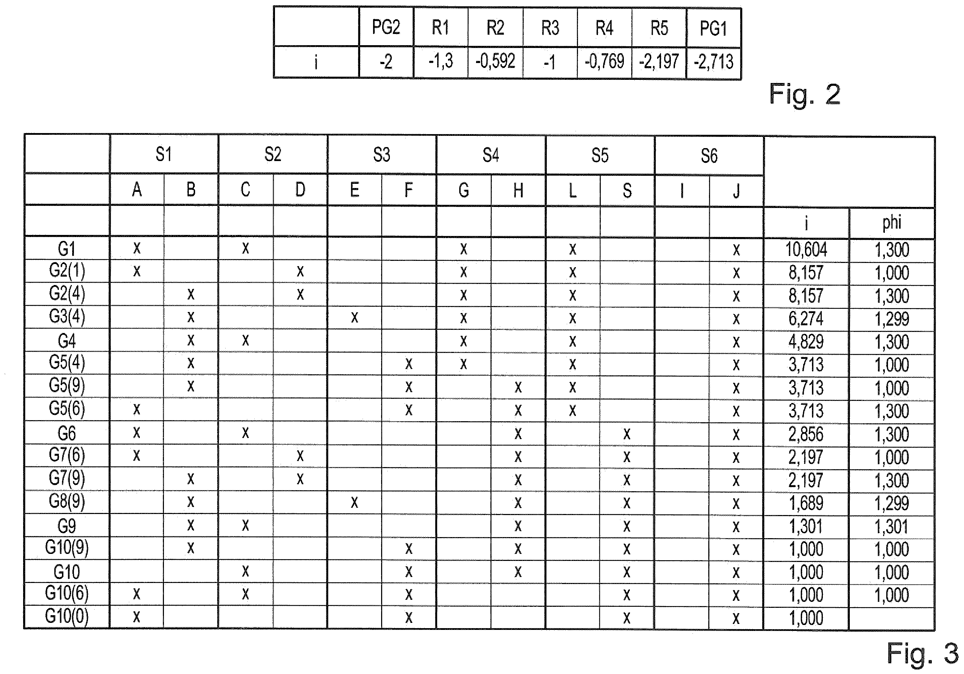

In Fig. 2 sind beispielhafte Zahlenwerte für die einzelnen Übersetzungen i der jeweiligen Radebenen PG1, PG2, R1-R5 angegeben. Die angegebene Übersetzung entspricht dem jeweiligen Zähneverhältnis der Stirnräder bzw. bei Planetengetrieben der Standardübersetzung i₀, dem Zähneverhältnis zwischen dem Hohlrad HR1, HR2 und dem Sonnenrad SR1, SR2. Das negative Vorzeichen bezieht sich auf eine Drehrichtungsumkehr. Die Übersetzung i der Stirnradpaare sind in folgender Kraftflussrichtung angegeben:
Erste, zweite, dritte und vierte Radebene R1, R2, R3, R4: von den beiden Getriebeeingangswelle 4, 5 zur Vorgelegewelle VW
Fünfte Radebene R5: von der Vorgelegewelle VW zur Hauptwelle 10
Es können auch andere Zahlenwerte für die Übersetzungsreihe eingesetzt werden.

Die Fig. 3 zeigt eine zugehörige Schaltmatrix des Getriebes 1 für die zehn Gänge G1 - G10 aus Sicht des Verbrennungsmotors 21 im ISG-Modus. Das sechste Schaltelement S6 bleibt dabei in seiner zweiten Schaltstellung J. Die Gänge G1 - G10 sind in der ersten Spalte aufgeführt. Wenn der Verbrennungsmotor 21 einen Kraftfluss über das zweite Teilgetriebe, über die Vollwelle 5, führt, dann kann im kraftflussfreien ersten Teilgetriebe, über die Hohlwelle 4, ein Gang vorgewählt werden oder die Teilgetriebe können gekoppelt werden. Der Vorwahlgang ist hinter der Gangnummer in Klammer angegeben. Zum Beispiel beim Gang G2(1) ist der zweite Gang G2 für den Verbrennungsmotor 21 aktiv, der erste Gang G1 ist für den Verbrennungsmotor 21 vorgewählt und gleichzeitig für die elektrische Maschine 2 bereits aktiv. Dabei wird in den an die Gänge G1 - G10 anschließenden Spalten aufgezeigt, welche Schaltelemente S1-S6 sich in welchen Schaltstellungen A-J befinden. Ein Kreuz x markiert eine geschlossene Schaltstellung A-J. Anschließend an die Spalten der Schaltelemente S1-S6 findet sich eine Spalte mit beispielhaften Gangübersetzungen i und eine Spalte mit beispielhaften Gangsprüngen phi zu jedem Gang G1 - G10.

Der Leistungsfluss im ersten Gang G1 wird, wie in Fig. 3 abgebildet, über die zweite Getriebeeingangswelle 5, das zweite Schaltelement S2 in seiner ersten Schaltstellung C, das erste Schaltelement S1 in seiner ersten Schaltstellung A, die erste Radebene R1, die Vorgelegewelle VW, die Abtriebskonstante R5 das vierte Schaltelement S4 in seiner ersten Schaltstellung G, die im langsamen Bereich geschaltete Bereichsgruppe PG1 auf die Ausgangswelle 3 geleitet. Der Leistungsfluss im zweiten Gang G2 wird über die zweite Getriebeeingangswelle 5, das zweite Schaltelement S2 in seiner zweiten Schaltstellung D, die dritte Radebene R3, die Vorgelegewelle VW, die Abtriebskonstante R5 das vierte Schaltelement S4 in seiner ersten Schaltstellung G, die im langsamen Bereich geschaltete Bereichsgruppe PG1 auf die Ausgangswelle 3 geleitet. Dabei kann über das erste Schaltelement S1 in seiner ersten Schaltstellung A sowohl der erste Gang G1 und damit die erste Radebene R1 als auch über die zweite Schaltstellung B der vierte Gang G4 und damit die zweite Radebene R2 vorgewählt werden. Die vorgewählten Gänge G1, G4 sind dem ersten Teilgetriebe zugeordnet. Der Leistungsfluss im dritten Gang G3 wird über die zweite Getriebeeingangswelle 5, das dritte Schaltelement S3 in seiner ersten Schaltstellung E, die vierte Radebene R4, die Vorgelegewelle VW, die Abtriebskonstante R5 das vierte Schaltelement S4 in seiner ersten Schaltstellung G, die im langsamen Bereich geschaltete Bereichsgruppe PG1 auf die Ausgangswelle 3 geleitet. Dabei kann über das erste Schaltelement S1 in seiner zweiten Schaltstellung B der vierte Gang G4 und damit die zweite Radebene R2 vorgewählt werden. Der Leistungsfluss im vierten Gang G4 wird über die zweite Getriebeeingangswelle 5, das zweite Schaltelement S2 in seiner ersten Schaltstellung C, die erste Getriebeeingangswelle 4, das erste Schaltelement S1 in seiner zweiten Schaltstellung B, die zweite Radebene R2, die Vorgelegewelle VW, die Abtriebskonstante R5 das vierte Schaltelement S4 in seiner ersten Schaltstellung G, die im langsamen Bereich geschaltete Bereichsgruppe PG1 auf die Ausgangswelle 3 geleitet. Der Leistungsfluss im fünften Gang G5 wird über die zweite Getriebeeingangswelle 5, das dritte Schaltelement S3 in seiner zweiten Schaltstellung F, die im langsamen Bereich geschaltete Bereichsgruppe PG1 auf die Ausgangswelle 3 geleitet. Dabei kann über das erste Schaltelement S1 in seiner zweiten Schaltstellung B und über das vierte Schaltelement S4 in seiner ersten Schaltstellung G der vierte Gang G4 vorgewählt werden. Alternativ kann über das erste Schaltelement S1 in seiner zweiten Schaltstellung B und über das vierte Schaltelement S4 in seiner zweiten Schaltstellung H der neunte Gang G9 vorgewählt werden. Ebenso kann über das erste Schaltelement S1 in seiner ersten Schaltstellung A und über das vierte Schaltelement S4 in seiner zweiten Schaltstellung H der sechste Gang G6 vorgewählt werden. Der Leistungsfluss im sechsten Gang G6 wird über die zweite Getriebeeingangswelle 5, das zweite Schaltelement S2 in seiner ersten Schaltstellung C, die erste Getriebeeingangswelle 4, das erste Schaltelement S1 in seiner ersten Schaltstellung A, die erste Radebene R1, die Vorgelegewelle VW, die Abtriebskonstante R5, das vierte Schaltelement S4 in seiner zweiten Schaltstellung H und über die in den schnellen Bereich geschaltete Bereichsgruppe PG1 auf die Ausgangswelle 3 geleitet. Dabei ist das fünfte Schaltelement S5 lastfrei, da es durch die Kraftübertragung über den Steg ST1 der Bereichsgruppe PG1 durch das vierte Schaltelement S4 in seiner zweiten Schaltstellung H umgangen wird. Der Leistungsfluss im siebten Gang G7 wird über die zweite Getriebeeingangswelle 5, das zweite Schaltelement S2 in seiner zweiten Schaltstellung D, die dritte Radebene R3, die Vorgelegewelle VW, die Abtriebskonstante R5, das vierte Schaltelement S4 in seiner zweiten Schaltstellung H und über die in den schnellen Bereich geschaltete Bereichsgruppe PG1 auf die Ausgangswelle 3 geleitet, wobei das fünfte Schaltelement S5 weiterhin lastfrei ist. Dabei kann über das erste Schaltelement S1 in seiner ersten Schaltstellung A der sechste Gang G6 vorgewählt werden oder über das erste Schaltelement S1 in seiner zweiten Schaltstellung B der neunte Gang G9 vorgewählt werden. Der Leistungsfluss im achten Gang G8 wird über die zweite Getriebeeingangswelle 5, das dritte Schaltelement S3 in seiner ersten Schaltstellung E, die vierte Radebene R4, die Vorgelegewelle VW, die Abtriebskonstante R5, das vierte Schaltelement S4 in seiner zweiten Schaltstellung H und über die in den schnellen Bereich geschaltete Bereichsgruppe PG1 auf die Ausgangswelle 3 geleitet, wobei das fünfte SAlternativ chaltelement S5 weiterhin lastfrei ist. Dabei kann über das erste Schaltelement S1 in seiner zweiten Schaltstellung B der neunte Gang G9 vorgewählt werden. Der Leistungsfluss im neunten Gang G9 wird über die zweite Getriebeeingangswelle 5, das zweite Schaltelement S2 in seiner ersten Schaltstellung C, die erste Getriebeeingangswelle 4, das erste Schaltelement S1 in seiner zweiten Schaltstellung B, die zweite Radebene R2, die Vorgelegewelle VW, die Abtriebskonstante R5, das vierte Schaltelement S4 in seiner zweiten Schaltstellung H und über die in den schnellen Bereich geschaltete Bereichsgruppe PG1 auf die Ausgangswelle 3 geleitet, wobei das fünfte Schaltelement S5 weiterhin lastfrei ist. Der Leistungsfluss im zehnten Gang G10 wird über die zweite Getriebeeingangswelle 5, das dritte Schaltelement S3 in seiner zweiten Schaltstellung F, die Hauptwelle 10 und über die in den schnellen Bereich geschaltete Bereichsgruppe PG1 auf die Ausgangswelle 3 geleitet. Dabei ist es von Vorteil, wenn zusätzlich das zweite Schaltelement S2 in seiner ersten Schaltstellung C geschaltet ist, da so die erste Getriebeeingangswelle 4 mit einer definierten Drehzahl, hier der Drehzahl der zweiten Getriebeeingangswelle 5, geführt wird. Alternativ dazu kann über das erste Schaltelement S1 in seiner zweiten Schaltstellung B und das vierte Schaltelement S4 in seiner zweiten Schaltstellung H der neunte Gang G9 vorgewählt werden, wobei das fünfte Schaltelement S5 lastfrei ist. Es kann aber auch über das erste Schaltelement S1 in seiner ersten Schaltstellung A und das zweite Schaltelement S2 in seiner ersten Schaltstellung C der sechste Gang G6 vorgewählt werden. Damit ist eine Absenkung der Vorgelegewellendrehzahl möglich, dabei muss allerdings das vierte Schaltelement S4 geöffnet sein. Über die Vorwahl des ersten Schaltelements S1 in seiner ersten Schaltstellung A ist im zehnten Gang auch ein Stillstand der elektrischen Maschine 2 und der Vorgelegewelle VW möglich, wobei das zweite Schaltelement S2 geöffnet sein muss.

Im sechsten, siebten, achten und neunten Gang G6 - G9 könnte das fünfte Schaltelement S5 auch in der ersten Schaltstellung L anstatt in der zweiten Schaltstellung S geschlossen bleiben, da das fünfte Schaltelement S5 in beiden Schaltstellungen L und S lastfrei ist, wenn der Kraftfluss über das vierte Schaltelement S4 in der zweiten Schaltstellung H direkt auf den Steg ST1 des ersten Planetengetriebes PG1 geleitet wird. Aufgrund der Drehzahlverhältnisse an der Bereichsgruppe PG1 ist es jedoch vorteilhaft, den Wechsel von der ersten Schaltstellung L des fünften Schaltelements S5 in die zweite Schaltstellung S möglichst früh zu vollziehen.

Das zugkraftunterbrechungsfreie Umschalten der Bereichsgruppe PG1 findet in der Regel beim Wechsel vom fünften Gang G5 in den sechsten Gang G6 statt. Im fünften Gang G5 bei verbrennungsmotorischem bzw. hybridischem Fahren im ISG-Modus, wird dieser über einen Direktgang in der Langsamen Bereichsgruppe PG1 geschaltet. Das dritte Schaltelement S3 befindet sich in seiner zweiten Schaltstellung F und das fünfte Schaltelement befindet sich in seiner ersten Schaltstellung L. Dies ist ebenfalls in Fig. 3 in der Zeile G5(4) ersichtlich. Die elektrische Maschine 2 wirkt aufgrund der Vorgeschichte noch im vierten Gang G4, wobei sich das erste Schaltelement S1 in seiner zweiten Schaltstellung B und das vierte Schaltelement S4 in seiner ersten Schaltstellung G befindet. Um nun zugkraftunterbrechungsfrei in den sechsten Gang G6 zu schalten, werden folgende Verfahrensschritte durchlaufen:
Wenn Last an der elektrischen Maschine 2 vorhanden ist, findet hier ein Lastabbau statt. Dabei übernimmt der Verbrennungsmotor 21 die Last.

Anschließend kann das vierte Schaltelement S4 aus der Schaltstellung G geöffnet werden.

Die zweite Schaltstellung H des vierten Schaltelements S4 wird aktiv über die Drehzahlregelung der elektrischen Maschine 2 synchronisiert. Dazu muss die Drehzahl der elektrischen Maschine 2 abgesenkt werden. Die Drehzahlabsenkung erfolgt um den Faktor der Übersetzung der Bereichsgruppe PG1, was im Zahlenbeispiel aus Fig. 3 dem Faktor 3,713 entspricht.

Anschließend kann das vierte Schaltelement S4 lastfrei in die zweite Schaltstellung H geschaltet werden. Dies entspricht der Zeile des Gangs 5 (9) in der Schaltmatrix Fig. 3. Übergangsweise ist in diesem Zustand der neunte gang G9 vorgewählt, da das erste Schaltelement S1 sich noch in seiner zweiten Schaltstellung B befindet. Dies kann jetzt lastfrei geöffnet werden. Die erste Schaltstellung A des ersten Schaltelements S1 wird nun aktiv über Drehzahlregelung der elektrischen Maschine 2 synchronisiert. Dazu muss die Drehzahl der elektrischen Maschine 2 bis zum Zieldrehzahlniveau des sechsten Ganges G6 angehoben werden. Die Drehzahlanhebung erfolgt um das Verhältnis der Gangübersetzung der beiden Gänge, welche der ersten Getriebeeingangswelle zugeordnet sind. Dies sind hier der erste und der vierte Gang G1, G4, was eine Drehzahlanhebung um den Faktor 1,3/0,592 = 2,2 (siehe Fig. 2, erste und zweite Radebene R1, R2) bedeutet.

Damit kann das erste Schaltelement S1 lastfrei in die Schaltstellung A gebracht werden, wobei gleichzeitig der Anschlussgang, der sechste Gang G6, vorgewählt ist.

Anschließend findet ein Lastübergang vom Verbrennungsmotor 21 auf die elektrische Maschine 2 statt. Dies bedeutet, dass lediglich die elektrische Maschine 2 die Zugkraft im Zielgang, dem sechsten Gang G6, stützt.

Nachdem der Verbrennungsmotor 21 lastfrei ist, wird die zweite Schaltstellung F des dritten Schaltelement S3 geöffnet.

Optional kann nun ein Wechseln des fünften Schaltelements S5 von der ersten Schaltstellung L in dessen zweite Schaltstellung S stattfinden während die Schaltstellung F des dritten Schaltelements S3 geöffnet ist. Dies bietet den Vorteil, dass nur die Hauptwelle 10 und damit eine geringe Trägheitsmasse am Sonnenrad SR1 des ersten Planetengetriebes PG1 wirkt. Die Synchronisation findet dabei über das Schaltelement S5 selbst statt, das synchronisiert ausgeführt ist. Die zweite Schaltstellung S des fünften Schaltelements S5 kann anschließend geschlossen werden. Die zweite Schaltstellung S kann nicht aktiv mit dem Verbrennungsmotor 21 synchronisiert werden, weil der Verbrennungsmotor 21 die Drehzahl nicht weit genug absenken kann, da hier das Drehzahlniveau des zehnten Gangs G10 (das dritte Schaltelement S3 und das fünfte Schaltelement S5 jeweils in der zweiten Schaltstellung F und S) benötigt würde, obwohl der sechste Gang G6 der Zielgang ist. Der Wechsel von der ersten Schaltstellung L in die zweite Schaltstellung S des fünften Schaltelements S5 an dieser Stelle ist, wie bereits erwähnt, vorteilhaft aber nicht unbedingt erforderlich. Der Wechsel könnte auch außerhalb der Schaltung vom fünften Gang G5 in den sechsten Gang G6 zu einem späteren Zeitpunkt erfolgen. Das fünfte Schaltelement S5 würde dann vorerst in der ersten Schaltstellung L verbleiben.

Unmittelbar nachdem die Schaltstellung F des dritten Schaltelements S3 geöffnet wurde , das bedeutet ggf. gleichzeitig mit dem eben genannten Schritt, synchronisiert der Verbrennungsmotor 21 auf Zieldrehzahl des sechsten Gangs G6. Damit wird die erste Schaltstellung C des zweiten Schaltelements synchronisiert und kann anschließend lastfrei geschlossen werden. Damit ist der sechste Gang G6 eingelegt und der Schaltvorgang für die Schaltelemente S1-S6 abgeschlossen. Der Lastübergang von der elektrischen Maschine 2 auf den Verbrennungsmotor 21 kann anschließend je nach Betriebsstrategie erfolgen.

Zusammenfassend muss, um vom fünften Gang G5 in den sechsten Gang G6 zu gelangen, sowohl das vierte Schaltelement S4 als auch das erste Schaltelement S1 umgeschaltet werden. Dabei wird zuerst das vierte Schaltelement S4 gewechselt und danach erst das erste Schaltelement S1. Dadurch wird die elektrische Maschine 2 zuerst in der Drehzahl abgesenkt und kann mit hohem Drehmoment synchronisieren. Es wird weniger Energie zur Drehzahländerung der Trägheitsmasse des Rotors 19 benötigt. Wenn zuerst das erste Schaltelement S1 umgeschaltet werden würde, würde die Drehzahl der elektrischen Maschine 2 zwischenzeitlich stark ansteigen und es bestände die Gefahr einer Überdrehzahl, ein geringes Drehmoment der elektrischen Maschine 2 bei hoher Drehzahl.

Das Verfahren ist unabhängig von der Vorübersetzung der Planetenstufe PG2 für die elektrische Maschine 2. Es geht auch ohne eine Planetenstufe PG2, wobei die elektrische Maschine 2 bzw. der Rotor 19 direkt an der ersten Getriebeeingangswelle 4 angebunden wäre.

Wie bereits beschrieben, kann im Direktgang, im zehnten Gang G10 (siehe Fig. 3) im ISG-Modus die Drehzahl der Vorgelegewelle VW bzw. der Vorgelegewellen abgesenkt werden. Dabei ist weiterhin für den ISG-Modus das sechste Schaltelement S6 in der zweiten Schaltstellung J geschlossen. Es wird verbrennungsmotorisch gefahren, wobei das dritte Schaltelement S3 sich in seiner zweiten Schaltstellung F befindet. Das vierte Schaltelement S4 befindet sich aufgrund seiner Vorgeschichte in seiner zweiten Schaltstellung H. Das führt dazu, dass im Zahlenbeispiel in Fig. 2 die Drehzahl der Vorgelegewelle VW um den Faktor 2,197 höher ist als die des Verbrennungsmotors 21. Dies entspricht der Stirnradübersetzung i der fünften Radebene R5. Das Sonnenrad SR1 und der Steg ST1 der Bereichsgruppe PG1 haben identische Drehzahlen, da die Bereichsgruppe PG1 durch das fünfte Schaltelement in seiner zweiten Schaltstellung S verblockt ist. Die Absenkung der Drehzahl der Vorgelegewelle VW ermöglicht einen besseren Gesamtwirkungsgrad des Getriebes 1 im Direktgang G10. Weniger Drehzahl bedeutet weniger Schleppverluste bzw. Verlustleistung an den Lagern und Dichtungen. Hierzu können lastfreie Schaltelemente geschlossen werden. Beim vorliegenden Radsatz ist es von Vorteil das erste Schaltelement S1 in seine erste Schaltstellung A zu bringen. Die Drehzahl der Vorgelegewelle VW beträgt dann nur noch (1/1,3=0,769) das 0,769-fache des Verbrennungsmotors 21. Die Drehzahl der Vorgelegewelle VW kann auch auf null abgesenkt werden. Dabei würden Schleppverluste an der Lagerung vermieden werden. Die Synchronisierung der Vorgelegewelle VW auf die Zieldrehzahl erfolgt über eine Drehzahlregelung an der elektrischen Maschine 2. Hierzu wird zuerst das Schaltelement des höchsten Gangs des ersten Teilgetriebes geschlossen, sofern es nicht aus seiner Vorgeschichte heraus geschlossen ist. Das ist im hier dargestellten Beispiel das erste Schaltelement in der zweiten Schaltstellung B durch das über die zweite Radebene R2 der vierte Gang G4 gebildet wird. So erreicht die elektrische Maschine 2 selbst auch kein hohes Drehzahlniveau und kann daher schneller synchronisieren. Es werden auch keine konventionellen Synchronisierungen belastet. In der Schaltmatrix in Fig. 3 wird beim zehnten Gang mit vorgewähltem sechsten Gang G10(6) die Drehzahl der Vorgelegewelle VW abgesenkt und im zehnten Gang mit Vorgewähltem Leerlauf G10(0) die Drehzahl der Vorgelegewelle VW und die Drehzahl der elektrischen Maschine 2 auf null abgesenkt. Auch hier erfolgt die Drehzahländerung der Vorgelegewelle VW mit Hilfe der elektrischen Maschine 2.

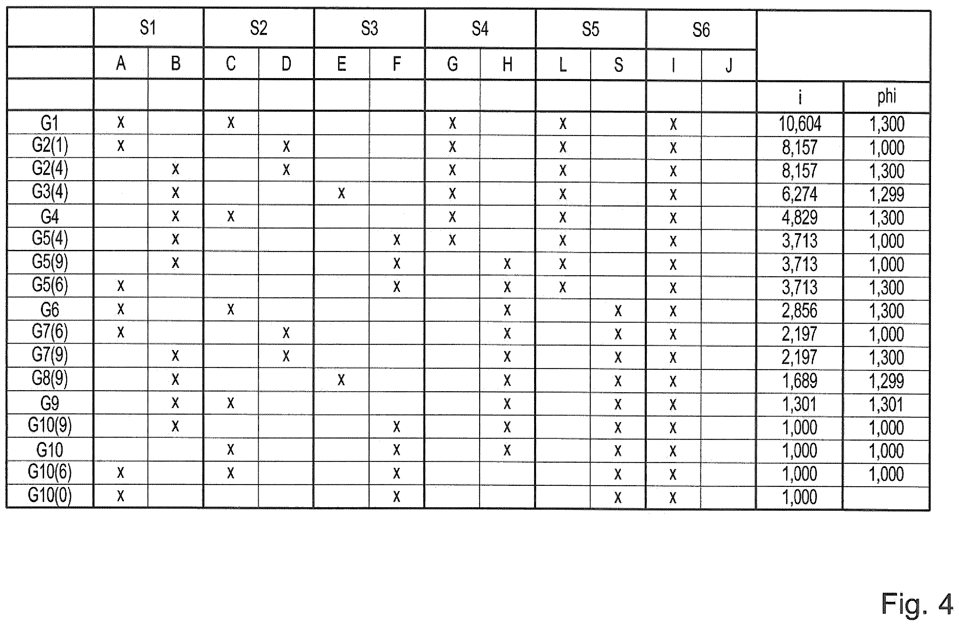

Die Fig. 4 zeigt eine zugehörige Schaltmatrix des Getriebes 1 für die zehn Gänge G1 - G10 aus Sicht des Verbrennungsmotors 21 im EDA-Modus. Das sechste Schaltelement S6 bleibt dabei in seiner ersten Schaltstellung I. Ansonsten ist die Schaltmatrix im EDA-Modus identisch mit der Schaltmatrix im ISG-Modus aus Fig. 3. Es ergeben sich jedoch andere Drehzahlverhältnisse an der elektrischen Maschine 2 und an der Planetenstufe PG2.

Das zugkraftunterbrechungsfreie Umschalten der Bereichsgruppe PG1 beim Wechsel vom fünften Gang G5 in den sechsten Gang G6 kann auch im EDA-Modus durchgeführt werden. Dabei ist das sechste Schaltelement S6 stets in seiner ersten Schaltstellung I. Im fünften Gang G5 bei verbrennungsmotorischem bzw. hybridischem Fahren im EDA-Modus, wird dieser über einen Direktgang in der Langsamen Bereichsgruppe PG1 geschaltet. Das dritte Schaltelement S3 befindet sich in seiner zweiten Schaltstellung F und das fünfte Schaltelement befindet sich in seiner ersten Schaltstellung L. Dies ist ebenfalls in Fig. 4 in der Zeile G5(4) ersichtlich. Die elektrische Maschine 2 wirkt aufgrund der Vorgeschichte noch im vierten Gang G4, wobei sich das erste Schaltelement S1 in seiner zweiten Schaltstellung B und das vierte Schaltelement S4 in seiner ersten Schaltstellung G befindet. Um nun zugkraftunterbrechungsfrei in den sechsten Gang G6 zu schalten, werden folgende Verfahrensschritte durchlaufen:
Wenn Last an der elektrischen Maschine 2 vorhanden ist, findet hier ein Lastabbau statt. Dabei übernimmt der Verbrennungsmotor 21 die Last.

Anschließend kann das vierte Schaltelement S4 aus der Schaltstellung G geöffnet werden.

Die zweite Schaltstellung H des vierten Schaltelements S4 wird aktiv über die Drehzahlregelung der elektrischen Maschine 2 synchronisiert. Dazu muss die Drehzahl des Stegs ST2 der Planetenstufe PG2 abgesenkt werden, was durch eine Absenkung der Drehzahl der elektrischen Maschine 2 geschieht. Die Drehzahlabsenkung am Steg ST2 der Planetenstufe PG2 erfolgt um den Faktor der Übersetzung der Bereichsgruppe PG1, was im Zahlenbeispiel aus Fig. 4 dem Faktor 3,713 entspricht.

Anschließend kann das vierte Schaltelement S4 lastfrei in die zweite Schaltstellung H geschaltet werden. Dies entspricht der Zeile des Gangs 5 (9) in der Schaltmatrix Fig. 4. Übergangsweise ist in diesem Zustand der neunte Gang G9 vorgewählt, da das erste Schaltelement S1 sich noch in seiner zweiten Schaltstellung B befindet. Dies kann jetzt lastfrei geöffnet werden. Die erste Schaltstellung A des ersten Schaltelements S1 wird nun aktiv über Drehzahlregelung der elektrischen Maschine 2 synchronisiert. Dazu muss die Drehzahl des Stegs ST2 der Planetenstufe PG2 mit Hilfe der elektrischen Maschine 2 bis zum Zieldrehzahlniveau des sechsten Ganges G6 angehoben werden. Die Drehzahlanhebung erfolgt um das Verhältnis der Gangübersetzung der beiden Gänge, welche der ersten Getriebeeingangswelle zugeordnet sind. Dies sind hier der erste und der vierte Gang G1, G4, was eine Drehzahlanhebung um den Faktor 1,3/0,592 = 2,2 (siehe Fig. 2, erste und zweite Radebene R1, R2) bedeutet.

Damit kann das erste Schaltelement S1 lastfrei in die erste Schaltstellung A gebracht werden, wobei gleichzeitig der Anschlussgang, der sechste Gang G6, vorgewählt ist.

Dann werden die Drehmomente des Verbrennungsmotors 21 und der elektrischen Maschine 2 so eingestellt, dass sie im Verhältnis der Standübersetzung der Planetenstufe PG2 stehen, damit das auszulegende dritte Schaltelement S3 lastfrei wird. Der Kraftfluss läuft dann ausschließlich über den Steg ST2 der Planetenstufe PG2 über den Zielgang, den sechsten Gang G6, über das erste Schaltelement S1 in der ersten Schaltstellung A und das vierte Schaltelement in der zweiten Schaltstellung H. Gleichzeitig werden die Drehmomente des Verbrennungsmotors 21 und der elektrischen Maschine 2 im Rahmen der Grenzen der beiden Arbeitsmaschinen so eingestellt, dass die Zugkraft möglichst nahe dem vom Fahrer oder einer Fahrstrategiefunktion gewünschten Sollwert kommt.

Nachdem das dritte Schaltelement S3 lastfrei ist, wird die zweite Schaltstellung F des dritten Schaltelement S3 geöffnet.

Optional kann nun ein Wechseln des fünften Schaltelements S5 von der ersten Schaltstellung L in dessen zweite Schaltstellung S stattfinden während die Schaltstellung F des dritten Schaltelements S3 geöffnet ist. Dies bietet den Vorteil, dass nur die Hauptwelle 10 und damit eine geringe Trägheitsmasse am Sonnenrad SR1 des ersten Planetengetriebes PG1 wirkt. Die Synchronisation findet dabei über das Schaltelement S5 selbst statt, das synchronisiert ausgeführt ist. Die zweite Schaltstellung S des fünften Schaltelements S5 kann anschließend geschlossen werden. Der Wechsel von der ersten Schaltstellung L in die zweite Schaltstellung S des fünften Schaltelements S5 an dieser Stelle ist, wie bereits erwähnt, vorteilhaft aber nicht unbedingt erforderlich. Der Wechsel könnte auch außerhalb der Schaltung vom fünften Gang G5 in den sechsten Gang G6 zu einem späteren Zeitpunkt erfolgen. Das fünfte Schaltelement S5 würde dann vorerst in der ersten Schaltstellung L verbleiben.

Unmittelbar nachdem die Schaltstellung F des dritten Schaltelements S3 geöffnet wurde , das bedeutet ggf. gleichzeitig mit dem eben genannten Schritt, werden die Drehmomente des Verbrennungsmotors 21 und der elektrischen Maschine 2 so gesteuert bzw. geregelt, dass die Drehzahl des Verbrennungsmotors 21 auf die Zieldrehzahl sinkt. Damit wird die erste Schaltstellung C des zweiten Schaltelements S2 synchronisiert und kann anschließend lastfrei geschlossen werden. Damit ist der sechste Gang G6 eingelegt und der Schaltvorgang für die Schaltelemente S1-S6 abgeschlossen. Der Lastübergang von der elektrischen Maschine 2 auf den Verbrennungsmotor 21 kann anschließend je nach Betriebsstrategie erfolgen.

Zusammenfassend muss, um im EDA-Modus vom fünften Gang G5 in den sechsten Gang G6 zu gelangen, sowohl das vierte Schaltelement S4 als auch das erste Schaltelement S1 umgeschaltet werden. Dabei wird zuerst das vierte Schaltelement S4 gewechselt und danach erst das erste Schaltelement S1. Dadurch wird die elektrische Maschine 2 zuerst in der Drehzahl abgesenkt und kann mit hohem Drehmoment synchronisieren. Es wird weniger Energie zur Drehzahländerung der Trägheitsmasse des Rotors 19 benötigt. Wenn zuerst das erste Schaltelement S1 umgeschaltet werden würde, würde die Drehzahl der elektrischen Maschine 2 zwischenzeitlich stark ansteigen und es bestände die Gefahr einer Überdrehzahl, ein geringes Drehmoment der elektrischen Maschine 2 bei hoher Drehzahl.

Für das erste und das vierte Schaltelement S1 und S4 erfolgt jeweils eine lastfreie Drehzahlsynchronisation mit Hilfe der elektrischen Maschine 2. Dabei wird am Holrad HR2 der Planetenstufe PG2 aufgrund von Trägheitsmassen ein dynamisches Moment abgestützt, welches sich ggf. negativ auf den Fahrkomfort auswirken könnte, weil das Hohlrad HR2 der Planetenstufe PG2 über das sechste Schaltelement S6 in der ersten Schaltposition I mit der zweiten Getriebeeingangswelle 5 verbunden ist. Daher könnte auch vor der Drehzahlsynchronisierung vom EDA-Modus in den ISG-Modus umgeschaltet werden und entsprechend diesem synchronisiert werden. Nach der jeweiligen Drehzahlsynchronisation wird dann wieder in den EDA-Modus zurück gewechselt.

Es sind im Hauptgetriebe HG auch andere Gangzuordnungen denkbar. Zum Beispiel kann die zweite Radebene R2 und die vierte Radebene R4 vertauscht werden. Damit wären die Radebenen für den dritten Gang G3 und den vierten Gang G4 vertauscht.

Es kann zusätzlich eine Trennkupplung oder Anfahrkupplung für den Verbrennungsmotor 21 hinzugefügt werden.

Außerdem können ein oder mehrere mechanische Rückwärtsgänge hinzugefügt werden. Dies kann entweder als zusätzliche Stirnradebene mit einem zusätzlichen Schaltelement oder als Planeten-Wendesatz mit zwei zusätzlichen Schaltelementen, eins für vorwärts und eins für rückwärts, umgesetzt werden. Außerdem kann eine sogenannte GPR-Bereichsgruppe eingesetzt werden, bei der der Rückwärtsgang in der Bereichsgruppe integriert ist.

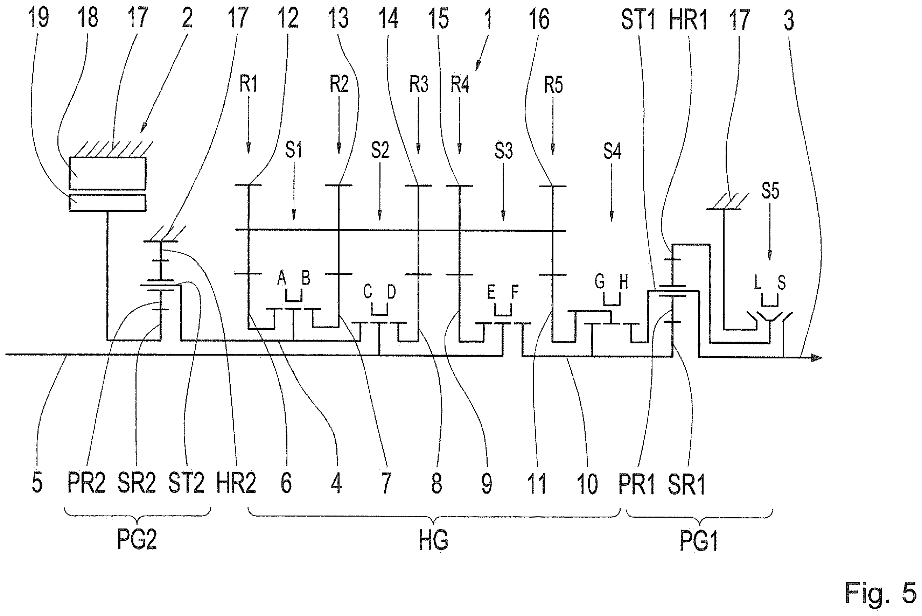

Die Fig. 5 zeigt eine zweite Ausführungsvariante eines erfindungsgemäßen 10-Gang-Getriebes. Das Getriebe 1 unterscheidet sich lediglich in der Ausführung des zweiten Planetengetriebes PG2. Das zweite Planetengetriebe PG2 ist ebenfalls als Planetenstufe zwischen einer elektrischen Maschine 2 und der ersten Getriebeeingangswelle 4 angeordnet. Die elektrische Maschine 2 besitzt einen Stator 18, welcher drehfest mit einem gehäusefesten Bauteil 17 bzw. einem Getriebegehäuse des Getriebes 1 oder mit einem anderen drehfesten Bauelement des Getriebes 1 verbunden ist, sodass der Stator 18 keine Drehzahl annehmen kann. Ein drehbar gelagerter Rotor 19 der elektrischen Maschine 2 ist mit einer als Sonnenrad SR2 des zweiten Planetengetriebes PG2 ausgebildeten Planetenradsatzwelle der Planetenstufe drehfest verbunden. Der Steg ST2 des zweiten Planetengetriebes PG2 ist drehfest mit der ersten Getriebeeingangswelle 4 verbunden. Das Hohlrad HR2 des zweiten Planetengetriebes PG2 ist drehfest mit einem Gehäuseteil 17 verbunden. Eine feste Vorübersetzung für die elektrische Maschine 2 hat den Vorteil, dass die elektrische Maschine 2 kostengünstig mit weniger Drehmoment, dafür aber höherer Drehzahl ausgelegt werden kann. Durch die Anordnung der elektrischen Maschine 2 mit der Planetenstufe an der ersten Getriebeeingangswelle 4 ist die elektrische Maschine 2 weiterhin dem ersten Teilgetriebe zugeordnet. Der weitere Aufbau des Getriebes 1 entspricht der ersten Ausführungsvariante aus Fig. 1.

Die Vorübersetzung durch die Planetenstufe PG2 könnte auch komplett entfallen. Die elektrische Maschine 2 wird dann mit weniger Drehzahl und mehr Drehmoment ausgelegt. Es sind im Hauptgetriebe HG auch andere Gangzuordnungen denkbar. Zum Beispiel kann die zweite Radebene R2 und die vierte Radebene R4 vertauscht werden. Damit wären die Radebenen für den dritten Gang G3 und den vierten Gang G4 vertauscht.

Es kann zusätzlich eine Trennkupplung oder Anfahrkupplung für den Verbrennungsmotor 21 hinzugefügt werden. Dann können das zweite und das dritte Schaltelement S2, S3 als synchronisierte Schaltelemente ausgeführt werden und die Synchronisation der Gänge des zweiten Teilgetriebes, die Gänge, welche der zweiten Getriebeeingangswelle 5 zugeordnet sind, erfolgt mit offener Kupplung.

Außerdem können auch hier ein oder mehrere mechanische Rückwärtsgänge hinzugefügt werden. Dies kann entweder als zusätzliche Stirnradebene mit einem zusätzlichen Schaltelement oder als Planeten-Wendesatz mit zwei zusätzlichen Schaltelementen, eins für vorwärts und eins für rückwärts, umgesetzt werden. Außerdem kann eine sogenannte GPR-Bereichsgruppe eingesetzt werden, bei der der Rückwärtsgang in der Bereichsgruppe integriert ist.

Die in Fig. 2 beispielhaft aufgezeigten Zahlenwerte für die einzelnen Übersetzungen i der jeweiligen Radebenen PG1, PG2, R1-R5 können auch für diese Ausführungsvariante eingesetzt werden. Ebenso sind aber auch hier andere Zahlenwerte einsetzbar.

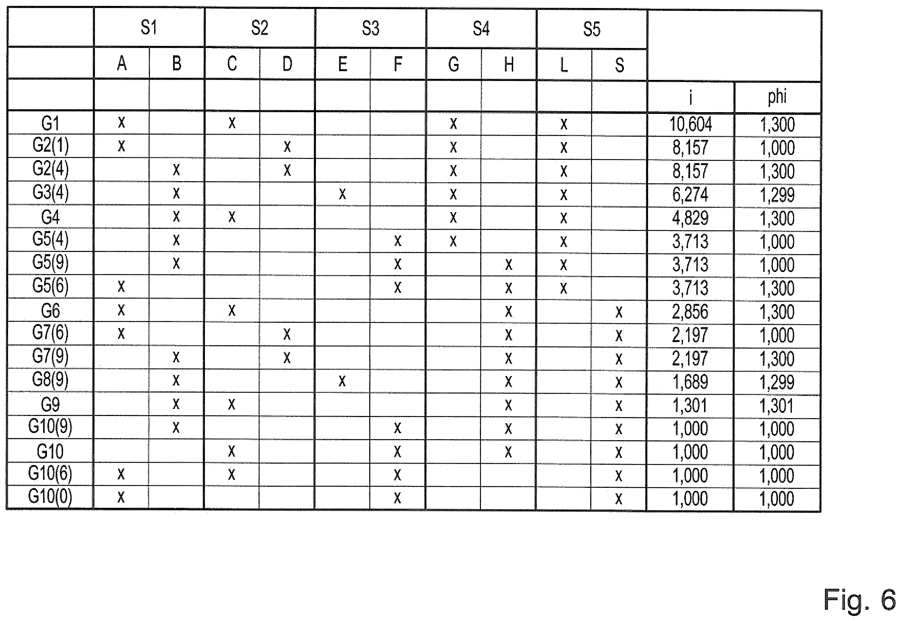

Die Fig. 6 zeigt eine zugehörige Schaltmatrix des Getriebes 1 aus Fig. 5 für die zehn Gänge G1 - G10 aus Sicht des Verbrennungsmotors 21. Diese Schaltmatrix entspricht im Wesentlichen der Schaltmatrix aus Fig. 3 im ISG-Modus, wobei das sechste Schaltelement S6 entfällt, da das Hohlrad HR2 der Planetenstufe PG2 dauerhaft drehfest mit einem Gehäuseteil verbunden ist. Das zugkraftunterbrechungsfreie Schalten der Bereichsgruppe PG1 sowie das Verfahren zur Absenkung der Vorgelegewellendrehzahl im Direktgang, dem zehnten Gang G10, werden ebenfalls durchgeführt wie in der ersten Variante in Fig. 1.

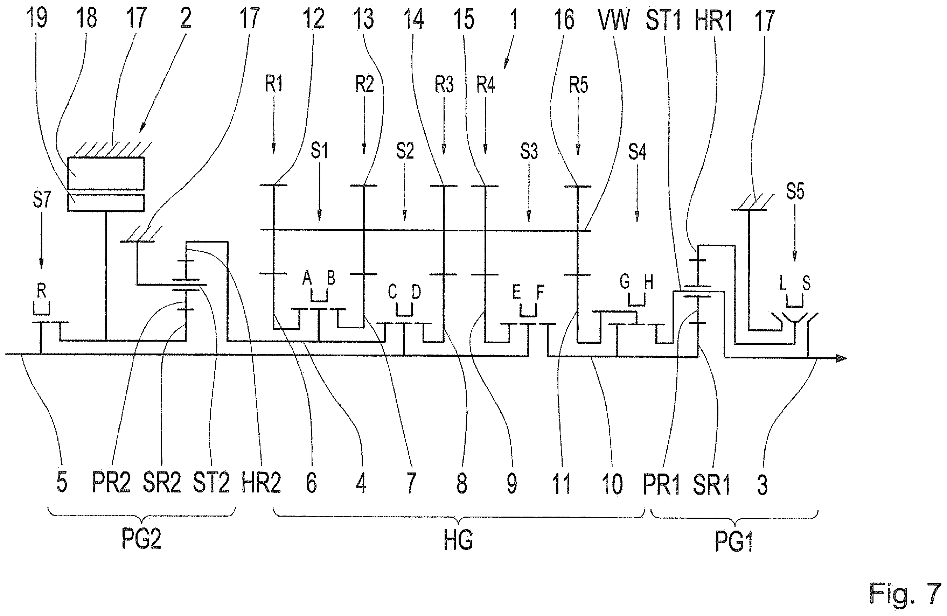

Die Fig. 7 zeigt eine dritte Ausführungsvariante eines erfindungsgemäßen 10-Gang-Getriebes. Das Getriebe 1 unterscheidet sich zu den zwei bisher aufgezeigten Ausführungsvarianten lediglich in der Ausführung des zweiten Planetengetriebes PG2. Das zweite Planetengetriebe PG2 ist ebenfalls als Planetenstufe zwischen einer elektrischen Maschine 2 und der ersten Getriebeeingangswelle 4 angeordnet. Die elektrische Maschine 2 besitzt einen Stator 18, welcher drehfest mit einem gehäusefesten Bauteil 17 bzw. einem Getriebegehäuse des Getriebes 1 oder mit einem anderen drehfesten Bauelement des Getriebes 1 verbunden ist, sodass der Stator 18 keine Drehzahl annehmen kann. Ein drehbar gelagerter Rotor 19 der elektrischen Maschine 2 ist mit einer als Sonnenrad SR2 des zweiten Planetengetriebes PG2 ausgebildeten Planetenradsatzwelle der Planetenstufe drehfest verbunden. Das Hohlrad HR2 des zweiten Planetengetriebes PG2 ist drehfest mit der ersten Getriebeeingangswelle 4 verbunden. Der Steg ST2 des zweiten Planetengetriebes PG2 ist drehfest mit einem Gehäuseteil 17 verbunden. Zusätzlich ist dem zweiten Planetengetriebe PG2 ein siebtes Schaltelement S7 zugeordnet, welches die elektrische Maschine 2 und die als Sonnenrad SR2 des zweiten Planetengetriebes PG2 ausgebildeten Planetenradsatzwelle der Planetenstufe mit der zweiten Getriebeeingangswelle 5 verbinden kann. Dieses siebte Schaltelement S7 wirkt nur einseitig und kann in der geschlossenen Schaltstellung R die zweite Getriebeeingangswelle 5 und das Sonnenrad SR2 des zweiten Planetengetriebes miteinander verbinden, oder es kann geöffnet sein und keine Verbindung zwischen zwei Bauteilen herstellen. Eine feste Vorübersetzung für die elektrische Maschine 2 hat den Vorteil, dass die elektrische Maschine 2 kostengünstig mit weniger Drehmoment, dafür aber höherer Drehzahl ausgelegt werden kann. Im vorliegenden Fall dreht die elektrische Maschine 2 in den Vorwärtsgängen rückwärts, was bei einer elektrischen Maschine 2 problemlos möglich ist. Über die Planetenstufe PG2 werden mit Hilfe des siebten Schaltelements S7 in seiner Schaltstellung R mechanische Rückwärtsgänge für den Verbrennungsmotor 21 zur Verfügung gestellt. Die Gänge, die dem ersten Teilgetriebe zugeordnet sind, die Gänge der ersten Getriebeeingangswelle 4 mit der ersten und zweiten Radebene R1 und R2, werden dann als Rückwärtsgänge mit zusätzlicher Untersetzung durch die Planetenstufe PG2 genutzt. Durch die Anordnung der elektrischen Maschine 2 mit der Planetenstufe an der ersten Getriebeeingangswelle 4 ist die elektrische Maschine 2 weiterhin dem ersten Teilgetriebe zugeordnet. Der weitere Aufbau des Getriebes 1 entspricht der ersten Ausführungsvariante aus Fig. 1.

Die in Fig. 2 beispielhaft aufgezeigten Zahlenwerte für die einzelnen Übersetzungen i der jeweiligen Radebenen PG1, PG2, R1-R5 können auch für diese Ausführungsvariante eingesetzt werden. Ebenso sind aber auch hier andere Zahlenwerte einsetzbar.

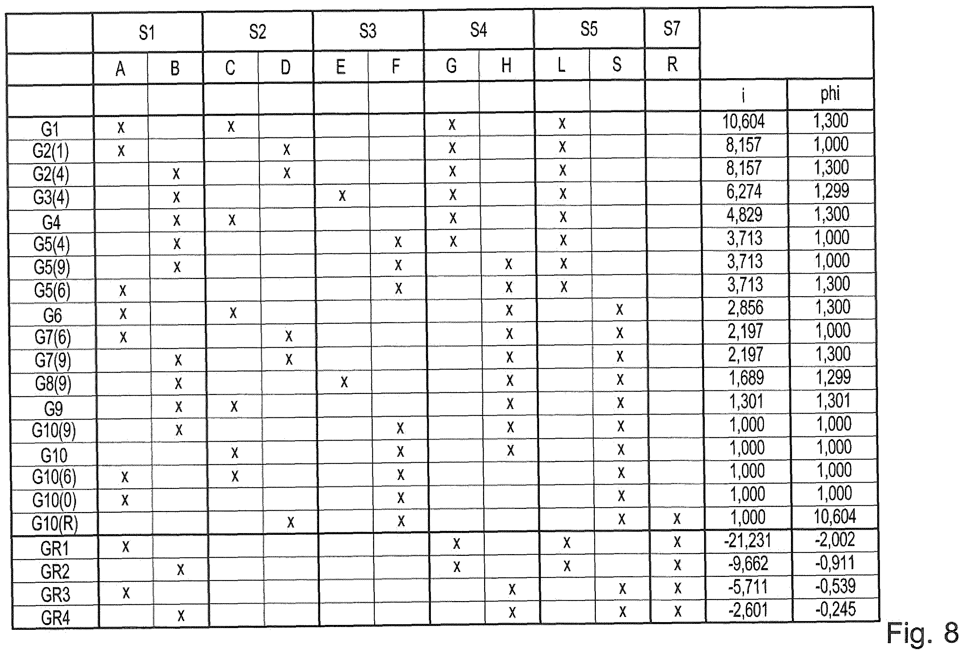

Die Fig. 8 zeigt eine zugehörige Schaltmatrix des Getriebes 1 aus Fig. 7 für die zehn Gänge G1 - G10 sowie vier Rückwärtsgänge GR1 - GR4 aus Sicht des Verbrennungsmotors 21. Diese Schaltmatrix entspricht im Wesentlichen der Schaltmatrix aus Fig. 3, wobei das sechste Schaltelement S6 entfällt und dafür ein siebtes Schaltelement S7 mit einer Schaltstellung R aufgenommen wurde. Das zugkraftunterbrechungsfreie Umschalten der Bereichsgruppe PG1 sowie das Verfahren zur Synchronisation der Vorgelegewellendrehzahl im Direktgang, dem zehnten Gang G10, werden ebenfalls durchgeführt wie in der ersten Variante in Fig. 1.

Der Leistungsfluss im ersten Rückwärtsgang RG1 wird, wie in Fig. 8 abgebildet, über die zweite Getriebeeingangswelle 5, das siebte Schaltelement S7 in seiner Schaltstellung R, das zweite Planetengetriebe PG2, die erste Getriebeeingangswelle 4, das erste Schaltelement S1 in seiner ersten Schaltstellung A, die erste Radebene R1, die Vorgelegewelle VW, die Abtriebskonstante R5 das vierte Schaltelement S4 in seiner ersten Schaltstellung G, die Hauptwelle 10 und die im langsamen Bereich geschaltete Bereichsgruppe PG1 auf die Ausgangswelle 3 geleitet. Der Leistungsfluss im zweiten Rückwärtsgang RG2 wird über die zweite Getriebeeingangswelle 5, das siebte Schaltelement S7 in seiner Schaltstellung R, das zweite Planetengetriebe PG2, die erste Getriebeeingangswelle 4, das erste Schaltelement S1 in seiner zweiten Schaltstellung B, die zweite Radebene R2, die Vorgelegewelle VW, die Abtriebskonstante R5 das vierte Schaltelement S4 in seiner ersten Schaltstellung G, die Hauptwelle 10 und die im langsamen Bereich geschaltete Bereichsgruppe PG1 auf die Ausgangswelle 3 geleitet. Der Leistungsfluss im dritten Rückwärtsgang RG3 wird über die zweite Getriebeeingangswelle 5, das siebte Schaltelement S7 in seiner Schaltstellung R, das zweite Planetengetriebe PG2, die erste Getriebeeingangswelle 4, das erste Schaltelement S1 in seiner ersten Schaltstellung A, die erste Radebene R1, die Vorgelegewelle VW, die Abtriebskonstante R5 das vierte Schaltelement S4 in seiner zweiten Schaltstellung H und die im schnellen Bereich geschaltete Bereichsgruppe PG1 auf die Ausgangswelle 3 geleitet. Der Leistungsfluss im vierten Rückwärtsgang RG4 wird über die zweite Getriebeeingangswelle 5, das siebte Schaltelement S7 in seiner Schaltstellung R, das zweite Planetengetriebe PG2, die erste Getriebeeingangswelle 4, das erste Schaltelement S1 in seiner zweiten Schaltstellung B, die zweite Radebene R2, die Vorgelegewelle VW, die Abtriebskonstante R5 das vierte Schaltelement S4 in seiner zweiten Schaltstellung H und die im schnellen Bereich geschaltete Bereichsgruppe PG1 auf die Ausgangswelle 3 geleitet.

Zur Absenkung der Drehzahl der elektrischen Maschine 2 insbesondere im Direktgang wird folgendes Verfahren durchgeführt:
Ausgegangen wird von einem Gang des zweiten Teilgetriebes, welcher der zweiten Getriebeeingangswelle 5 zugeordnet ist, beim verbrennungsmotorischen Fahren.
Dies kann zum Beispiel der Direktgang, der zehnte Gang G10 sein, bei dem das dritte Schaltelement S3 in seiner zweiten Schaltstellung F ist.
Die Drehzahl der elektrischen Maschine 2 wird abgesenkt, indem das erste Schaltelemente S1 geöffnet wird und das siebte Schaltelement S7 in seine Schaltstellung R gebracht wird. Das siebte Schaltelement S7, bzw. der dadurch geschaltete Gang, wird durch die Drehzahlregelung der elektrischen Maschine 2 synchronisiert. Die elektrische Maschine 2 dreht dann gleichschnell wie der Verbrennungsmotor 21 und die Vorübersetzung der Planetenstufe PG2 ist nicht wirksam. Dies bietet den Vorteil, dass geringe Nulllastverluste an der elektrischen Maschine 2 entstehen. Die elektrische Maschine 2 ist direkt mit dem Verbrennungsmotor 21 verbunden, sodass bei einer Lastpunktanhebung am Verbrennungsmotor 21 das zusätzliche Drehmoment des Verbrennungsmotors 21 hin zur elektrischen Maschine 2 nicht über eine Verzahnung geleitet wird. Dies bringt einen guten mechanischen Wirkungsgrad. In der Schaltmatrix in Fig. 8 ist dies in Zeile G10 (R) aufgezeigt. Zudem ist bei diesem Beispiel die Vorgelegewellendrehzahl durch Schließen des zweiten Schaltelements S2 in der zweiten Schaltstellung D (dritte Radebene R3 mit Stirnradübersetzung -1) abgesenkt. Im Zahlenbeispiel drehen dann der Verbrennungsmotor 21, die elektrische Maschine 2 und die Vorgelegewelle VW alle gleich schnell. Bei Fern-LKW ist die Absenkung im Direktgang besonders sinnvoll, da der Direktgang einen hohen Fahranteil aufweist.

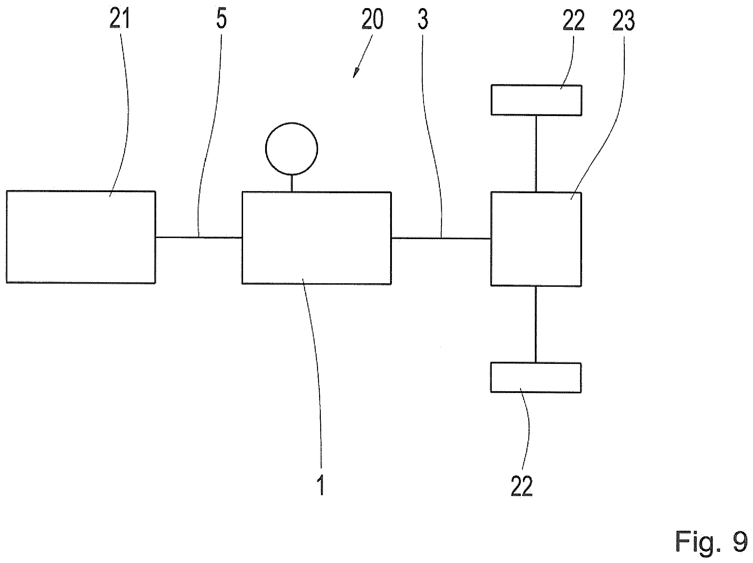

Das Getriebe 1 kann Bestandteil eines Antriebsstrangs 20 eines Hybridfahrzeugs sein. Dies wird in Fig. 9 dargestellt. Der erfindungsgemäße Antriebsstrang 20 weist neben dem erfindungsgemäßen Getriebe 1 einen Verbrennungsmotor 21 als zweiten Antrieb, sowie ein mit Rädern 22 des Hybridfahrzeugs verbundenes Achsgetriebe 23 auf, wobei die zweite Getriebeeingangswelle 5 des Hauptgetriebes HG ständig mit dem Verbrennungsmotor 21 verbunden oder verbindbar ist und die Ausgangswelle 3 des Getriebes 1 mit dem Achsgetriebe 23 antriebswirksam verbunden ist. Eine Trennkupplung für den Verbrennungsmotor 21 kann zwischen dem Verbrennungsmotor 21 und dem Getriebe 1 verbaut werden, ist aber zum rein elektrischen Fahren nicht notwendig, da die zweite Getriebeeingangswelle 5 wie beschrieben durch Öffnen von Schaltelementen abgekoppelt werden kann.

### Bezugszeichen

1 Getriebe
2 elektrische Maschine
3 Ausgangswelle
4 erste Getriebeeingangswelle
5 zweite Getriebeeingangswelle
6 erstes Losrad des Hauptgetriebes
7 zweites Losrad des Hauptgetriebes
8 drittes Losrad des Hauptgetriebes
9 viertes Losrad des Hauptgetriebes
10 Hauptwelle
11 fünftes Losrad des Hauptgetriebes
12 erstes Festrad der Vorgelegewelle
13 zweites Festrad der Vorgelegewelle
14 drittes Festrad der Vorgelegewelle
15 viertes Festrad der Vorgelegewelle
16 fünftes Festrad der Vorgelegewelle
17 gehäusefestes Bauteil
18 Stator der elektrischen Maschine
19 Rotor der elektrischen Maschine
20 Antriebsstrang
21 Verbrennungsmotor
22 Räder
23 Achsgetriebe
HG Hauptgetriebe
PG1 erstes Planetengetriebe, Bereichsgruppe
PG2 zweites Planetengetriebe, Planetenstufe
EM elektrische Maschine
HR1, HR2 Holrad
ST1, ST2 Steg
SR1, SR2 Sonnenrad
PR1, PR2 Planetenrad
S1 erstes Schaltelement
S2 zweites Schaltelement
S3 drittes Schaltelement
S4 viertes Schaltelement
S5 fünftes Schaltelement
S6 sechstes Schaltelement
S7 siebtes Schaltelement
A erste Schaltstellung des ersten Schaltelements S1
B zweite Schaltstellung des ersten Schaltelements S1
C erste Schaltstellung des zweiten Schaltelements S2, Teilgetriebekopplung
D zweite Schaltstellung des zweiten Schaltelements S2
E erste Schaltstellung des dritten Schaltelements S3
F zweite Schaltstellung des dritten Schaltelements S3, Direktgang
G erste Schaltstellung des vierten Schaltelements S4
H zweite Schaltstellung des vierten Schaltelements S4, Zugkraftunterstützung der Bereichsgruppe
I erste Schaltstellung des fünften Schaltelements S5, EDA-Modus
J zweite Schaltstellung des fünften Schaltelements S5, ISG-Modus
L erste Schaltstellung des sechsten Schaltelements S6, langsamer Bereich
S zweite Schaltstellung des sechsten Schaltelements S6, schneller Bereich
R1 erste Radebene
R2 zweite Radebene
R3 dritte Radebene
R4 vierte Radebene
R5 fünfte Radebene, Abtriebskonstante
G1 erster Gang
G2 zweiter Gang
G3 dritter Gang
G4 vierter Gang
G5 fünfter Gang
G6 sechster Gang
G7 siebter Gang
G8 achter Gang
G9 neunter Gang
G10 zehnter Gang
GR1 erster Rückwärtsgang
GR2 zweiter Rückwärtsgang
GR3 dritter Rückwärtsgang
GR4 vierter Rückwärtsgang
i Übersetzung
phi Gangsprung

## Patentansprüche

1. Getriebe (1) für ein Kraftfahrzeug mit einem zwei parallel geschaltete Teilgetriebe umfassenden Hauptgetriebe (HG), sowie einer Ausgangswelle (3), sowie einem ersten und einem zweiten, die Elemente Steg (ST1, ST2), Sonnenrad (SR1, SR2) und Hohlrad (HR1, HR2) aufweisende Planetengetriebe (PG1, PG2), wobei jedes Teilgetriebe eine Getriebeeingangswelle (4, 5) aufweist, wobei eine erste Getriebeeingangswelle (4) als Hohlwelle und eine zweite Getriebeeingangswelle (5) als Vollwelle ausgeführt ist, wobei ein erstes Planetengetriebe (PG1) als Bereichsgruppe an das Hauptgetriebe (HG) anschließt, wobei das Hauptgetriebe (HG) eine erste (R1), eine zweite (R2), eine dritte (R3), eine vierte (R4) und eine fünfte Radebene (R5) und ein erstes (S1), ein zweites (S2), ein drittes (S3) und ein viertes Schaltelement (S4) und mindestens eine Vorgelegewelle (VW) umfasst, wobei ein zweites Planetengetriebe (PG2) zwischen einer elektrischen Maschine (2) und der ersten Getriebeeingangswelle (4) als Planetenstufe vorgesehen ist, wobei das erste Schaltelement (S1) in einer ersten Schaltstellung (A) die erste Radebene (R1) und in einer zweiten Schaltstellung (B) die zweite Radebene (R2) mit der ersten Getriebeeingangswelle (4) verbindet, wobei das zweite Schaltelement (S2) in einer ersten Schaltstellung (C) die erste Getriebeeingangswelle (4) und in einer zweiten Schaltstellung (D) die dritte Radebene (R3) mit der zweiten Getriebeeingangswelle (5) verbindet, womit das zweite Schaltelement (S2) in der ersten Schaltstellung (C) der Teilgetriebekopplung dient, und wobei das vierte Schaltelement (S4) in einer zweiten Schaltstellung (H) die fünfte Radebene (R5) und den Steg (ST1) der Bereichsgruppe verbindet und damit die Bereichsgruppe unter Last geschaltet werden kann.

2. Getriebe (1) nach Anspruch 1, **dadurch gekennzeichnet, dass** das vierte Schaltelement (S4) in einer ersten Schaltstellung (G) die fünfte Radebene (R5) des Hauptgetriebes (HG) mit einer Hauptwelle (10) verbindet.

3. Getriebe (1) nach Anspruch 1 oder 2, **dadurch gekennzeichnet, dass** das Getriebe (1) ein fünftes Schaltelement (S5) umfasst, welches das Hohlrad (HR1) der Bereichsgruppe entweder mit einer Ausgangswelle (3) koppelt oder gehäusefest arretiert.

4. Getriebe (1) nach Anspruch 1, 2 oder 3, **dadurch gekennzeichnet, dass** das Getriebe (1) ein sechstes Schaltelement (S6) umfasst, welches in einer ersten Schaltposition (I) die zweite Eingangswelle (5) mit dem Hohlrad (HR2) der Planetenstufe koppelt und in einer zweiten Schaltstellung (J) das Hohlrad (HR2) der Planetenstufe gehäusefest arretiert.

5. Getriebe (1) nach Anspruch 1, 2 oder 3, **dadurch gekennzeichnet, dass** das Hohlrad (HR2) der Planetenstufe direkt mit einem Gehäuseteil (17) verbunden ist.

6. Getriebe (1) nach Anspruch 1, 2 oder 3, **dadurch gekennzeichnet, dass** das Getriebe (1) ein sechstes Schaltelement (S6) umfasst, welches bei Betätigung die zweite Getriebeeingangswelle (5) mit der elektrischen Maschine (2) und dem Sonnenrad (SR2) der Planetenstufe verbindet.

7. Getriebe (1) nach einem der vorangehenden Ansprüche 1 - 6, **dadurch gekennzeichnet, dass** alle Zahnräder auf der mindestens einen Vorgelegewelle (VW) als Festräder (12, 13, 14, 15, 16) ausgeführt sind.

8. Getriebe (1) nach einem der vorangehenden Ansprüche 1 - 7, **dadurch gekennzeichnet, dass** alle Radebenen (R1-R5) als Vorwärtsgangradebenen ausgebildet sind und ein Rückwärtsgang über eine Drehrichtungsumkehr der elektrischen Maschine (2) erzeugt wird.

9. Getriebe (1) nach einem der vorangehenden Ansprüche 1 - 8, **dadurch gekennzeichnet, dass** alle Schaltelemente im Hauptgetriebe (S1, S2, S3, S4) als unsynchronisierte Klauenschaltelement ausgeführt sind.

10. Getriebe (1) nach einem der Ansprüche 1 - 5 oder 7 - 9, **dadurch gekennzeichnet, dass** alle Schaltelemente (S1, S2, S3, S4, S5, S6) als doppeltwirkende Schaltelemente ausgeführt sind.

11. Antriebsstrang (20) eines Hybridfahrzeugs, wobei der Antriebsstrang (20) einen Verbrennungsmotor (21), ein Getriebe (1) entsprechend einem der vorangehenden Ansprüche, sowie ein mit Rädern (22) des Hybridfahrzeugs verbundenes Achsgetriebe (23) aufweist, wobei die zweite Getriebeeingangswelle (5) des Getriebes (1) ständig mit dem Verbrennungsmotor (21) verbunden oder verbindbar ist und die Ausgangswelle (3) des Getriebes (1) mit dem Achsgetriebe (23) antriebswirksam verbunden bzw. verbindbar ist.

## Claims

1. Transmission (1) for a motor vehicle with a main transmission (HG), comprising two parallel-connected partial transmissions, and also an output shaft (3), and also a first and a second planetary gearing (PG1, PG2), having the elements planet arm (ST1, ST2), sun gearwheel (SR1, SR2) and internal gearwheel (HR1, HR2), wherein each partial transmission has a transmission input shaft (4, 5), wherein a first transmission input shaft (4) is configured as a hollow shaft and a second transmission input shaft (5) is configured as a solid shaft, wherein a first planetary gearing (PG1) adjoins the main transmission (HG) as a range group, wherein the main transmission (HG) comprises a first gearwheel plane (R1), a second gearwheel plane (R2), a third gearwheel plane (R3), a fourth gearwheel plane (R4) and a fifth gear wheel plane (R5) and a first shifting element (S1), a second shifting element (S2), a third shifting element (S3) and a fourth shifting element (S4) and at least one countershaft (VW), wherein a second planetary gearing (PG2) is provided between an electrical machine (2) and the first transmission input shaft (4) as a planetary stage, wherein the first shifting element (S1) in a first shifting position (A) connects the first gearwheel plane (R1) and in a second shifting position (B) connects the second gearwheel plane (R2) to the first transmission input shaft (4), wherein the second shifting element (S2) in a first shifting position (C) connects the first transmission input shaft (4) and in a second shifting position (D) connects the third gearwheel plane (R3) to the second transmission input shaft (5), whereby the second shifting element (S2) in the first shifting position (C) serves for coupling the partial transmissions, and wherein the fourth shifting element (S4) in a second shifting position (H) connects the fifth gearwheel plane (R5) and the planet arm (ST1) of the range group, and consequently the range group can be shifted under load.

2. Transmission (1) according to Claim 1, **characterized in that** the fourth shifting element (S4) in a first shifting position (G) connects the fifth gearwheel plane (R5) of the main transmission (HG) to a main shaft (10).

3. Transmission (1) according to Claim 1 or 2, **characterized in that** the transmission (1) comprises a fifth shifting element (S5), which either couples the internal gearwheel (HR1) of the range group to an output shaft (3) or arrests it fixedly on the housing.

4. Transmission (1) according to Claim 1, 2 or 3, **characterized in that** the transmission (1) comprises a sixth shifting element (S6), which in a first shifting position (I) couples the second input shaft (5) to the internal gearwheel (HR2) of the planetary stage and in a second shifting position (J) arrests the internal gearwheel (HR2) of the planetary stage fixedly on the housing.

5. Transmission (1) according to Claim 1, 2 or 3, **characterized in that** the internal gearwheel (HR2) of the planetary stage is connected directly to a housing part (17) .

6. Transmission (1) according to Claim 1, 2 or 3, **characterized in that** the transmission (1) comprises a sixth shifting element (S6), which upon actuation connects the second transmission input shaft (5) to the electrical machine (2) and the sun gearwheel (SR2) of the planetary stage.

7. Transmission (1) according to one of the preceding Claims 1 - 6, **characterized in that** all of the gearwheels on the at least one countershaft (VW) are configured as fixed wheels (12, 13, 14, 15, 16).

8. Transmission (1) according to one of the preceding Claims 1 - 7, **characterized in that** all of the gearwheel planes (R1-R5) are formed as forward-gear gearwheel planes and a reverse gear is produced by a reversal of the direction of rotation of the electrical machine (2).

9. Transmission (1) according to one of the preceding Claims 1 - 8, **characterized in that** all of the shifting elements in the main transmission (S1, S2, S3, S4) are configured as unsynchronized dog-clutch shifting elements.

10. Transmission (1) according to one of Claims 1 - 5 or 7 - 9, **characterized in that** all of the shifting elements (S1, S2, S3, S4, S5, S6) are configured as double-acting shifting elements.

11. Powertrain (20) of a hybrid vehicle, wherein the powertrain (20) comprises an internal combustion engine (21), a transmission (1) corresponding to one of the preceding claims, and also an axle drive (23) connected to wheels (22) of the hybrid vehicle, wherein the second transmission input shaft (5) of the transmission (1) is constantly connected or connectable to the internal combustion engine (21) and the output shaft (3) of the transmission (1) is drive-effectively connected or connectable to the axle drive (23).

## Revendications

1. Boîte de vitesses (1) pour un véhicule automobile avec une boîte de vitesses principale (HG) comprenant deux boîtes de vitesses partielles montées en parallèle, ainsi qu'avec un arbre de sortie (3), ainsi qu'avec un premier et un second engrenages planétaires (PG1, PG2) présentant les éléments porte-satellites (ST1, ST2), roue solaire (SR1, SR2) et couronne (HR1, HR2), dans laquelle chaque boîte de vitesses partielle présente un arbre d'entrée de boîte de vitesses (4, 5), dans laquelle un premier arbre d'entrée de boîte de vitesses (4) est constitué par un arbre creux et un second arbre d'entrée de boîte de vitesses (5) est constitué par un arbre plein, dans laquelle un premier engrenage planétaire (PG1) se raccorde comme groupe de zone à la boîte de vitesses principale (HG), dans laquelle la boîte de vitesses principale (HG) comprend un premier (R1), un deuxième (R2), un troisième (R3), un quatrième (R4) et un cinquième (R5) plans de roues et un premier (S1), un deuxième (S2), un troisième (S3) et un quatrième (S4) éléments de changement de vitesse et au moins un arbre intermédiaire (VW), dans laquelle il est prévu un second engrenage planétaire (PG2) entre une machine électrique (2) et le premier arbre d'entrée de boîte de vitesses (4) comme étage planétaire, dans laquelle le premier élément de changement de vitesse (S1) relie dans une première position de commutation (A) le premier plan de roues (R1) et dans une deuxième position de commutation (B) le deuxième plan de roues (R2) au premier arbre d'entrée de boîte de vitesses (4), dans laquelle le deuxième élément de changement de vitesses (S2) relie dans une première position de commutation (C) le premier arbre d'entrée de boîte de vitesses (4) et dans une deuxième position de commutation (D) le troisième plan de roues (R3) au second arbre d'entrée de boîte de vitesses (5), le deuxième élément de changement de vitesse (S2) servant ainsi dans la première position de commutation (C) pour le couplage de la boîte de vitesses partielle, et dans laquelle le quatrième élément de changement de vitesse (S4) dans une deuxième position de commutation (H) relie le cinquième plan de roues (R5) et le porte-satellites (ST1) du groupe de zone et le groupe de zone peut ainsi être commuté en charge.

2. Boîte de vitesses (1) selon la revendication 1, **caractérisée en ce que** le quatrième élément de changement de vitesse (S4) dans une première position de commutation (G) relie le cinquième plan de roues (R5) de la boîte de vitesses principale (HG) à un arbre secondaire (10).

3. Boîte de vitesses (1) selon la revendication 1 ou 2, **caractérisée en ce que** la boîte de vitesses (1) comprend un cinquième élément de changement de vitesse (S5), qui soit couple la couronne (HR1) du groupe de zone à un arbre de sortie (3) soit la bloque par rapport au carter.

4. Boîte de vitesses (1) selon la revendication 1, 2 ou 3, **caractérisée en ce que** la boîte de vitesses (1) comprend un sixième élément de changement de vitesse (S6), qui dans une première position de commutation (1) couple le second arbre d'entrée (5) à la couronne (HR2) de l'étage planétaire et dans une deuxième position de commutation (J) bloque la couronne (HR2) de l'étage planétaire par rapport au carter.

5. Boîte de vitesses (1) selon la revendication 1, 2 ou 3, **caractérisée en ce que** la couronne (HR2) de l'étage planétaire est assemblée directement à une partie de carter (17).

6. Boîte de vitesses (1) selon la revendication 1, 2 ou 3, **caractérisée en ce que** la boîte de vitesses (1) comprend un sixième élément de changement de vitesse (S6) qui, lorsqu'il est actionné, relie le second arbre d'entrée de boîte de vitesses (5) à la machine électrique (2) et à la roue solaire (SR2) de l'étage planétaire.

7. Boîte de vitesses (1) selon l'une quelconque des revendications précédentes 1 à 6, **caractérisée en ce que** toutes les roues dentées sur ledit au moins un arbre intermédiaire (VW) sont réalisées sous forme de roues fixes (12, 13, 14, 15, 16).

8. Boîte de vitesses (1) selon l'une quelconque des revendications précédentes 1 à 7, **caractérisée en ce que** tous les plans de roues (R1 - R5) sont réalisés comme plans de roues de marche avant et une marche arrière est produite par une inversion du sens de rotation de la machine électrique (2).

9. Boîte de vitesses (1) selon l'une quelconque des revendications précédentes 1 à 8, **caractérisée en ce que** tous les éléments de changement de vitesse dans la boîte de vitesses principale (S1, S2, S3, S4) sont réalisés comme éléments de changement de vitesse à griffes non synchronisés.

10. Boîte de vitesses (1) selon l'une quelconque des revendications 1 à 5 ou 7 à 9, **caractérisée en ce que** tous les éléments de changement de vitesse (S1, S2, S3, S4, S5, S6) sont réalisés comme éléments de changement de vitesse à double effet.

11. Chaîne cinématique (20) d'un véhicule hybride, dans laquelle la chaîne cinématique (20) présente un moteur à combustion interne (21), un boîte de vitesses (1) selon l'une quelconque des revendications précédentes, ainsi qu'une transmission axiale (23) reliée à des roues (22) du véhicule hybride, dans laquelle le second arbre d'entrée de boîte de vitesses (5) de la boîte de vitesses (1) est ou peut être relié en permanence au moteur à combustion interne (21) et l'arbre de sortie (3) de la boîte de vitesses (1) est ou peut être relié en mode d'entraînement à la transmission axiale (23).
